# EUROPEAN PATENT APPLICATION

(11) **EP 2 924 916 A1**
(43) Date of publication of application: **30.09.2015**
(21) Application number: 15161475.7
(22) Date of filing: 27.03.2015
(51) Int. Cl.: H04L 9/32, G06K 19/08

(54) **SECURITY SCHEME FOR AUTHENTICATING DIGITAL ENTITIES AND AGGREGATE OBJECT ORIGINS**

(30) Priority: 28.03.2014 US 201461971880 P; 30.01.2015 US 201514610831
(71) Applicant: Enceladus IP Holdings LLC, Mclean, VA 22102 (US)
(72) Inventor: Scott, Wallace, McLean, Virginia 22102 (US)
(74) Representative: Jones, Keith William

(57) **Abstract**

Systems and methods use an origin pattern to verify the authenticity of a collection of items or an entity offering items for sale. Example methods include receiving identifiers for items in a collection, determining the requesting entity is authorized to include the items in the collection, generating an origin pattern based on a hash of a private identifier for the requesting entity and a collection identifier, and providing the origin pattern for placement of packaging for the collection. Another example method includes generating a first digital identity origin pattern that is provided for display, receiving a verification request with a second digital identity origin pattern, and verifying that the verification requestor generated the first digital identity origin pattern, a fingerprint component of the first digital identity origin pattern matches a fingerprint component of the second digital identity origin pattern, and the verification request falls within a verification window.

## Description

### RELATED APPLICATION

This application claims priority to Provisional Patent Application Serial No. 61/971,880, entitled "SECURITY SCHEME FOR AUTHENTICATING PRODUCT ORIGINS" filed on March 28, 2014. The subject matter of this earlier filed application is hereby incorporated by reference in its entirety.

### BACKGROUND

Counterfeiting and product diversion are issues that afflict virtually all types of manufacturing industries worldwide, and are growing at an alarming rate. Governments are responding by demanding more transparency in their contractors' supply chains and by introducing anti-counterfeiting regulation across multiple regions and industries. Technologies currently used in attempts to protect against counterfeiting include holograms, chemical forensics, Radio-Frequency Identification, and moire ink patterns, *etc.* While these measures work well in certain applications, they are expensive to generate, require special training or equipment for verification, and require physical presence to verify.

### SUMMARY

The subject matter of the present disclosure relates to a security scheme for authenticating the identity of a product owner when the product is not physically present for inspection and verification. By authenticating the identity of the product's owner, one is therefore able to authenticate the product at a distance. Implementations also provide a security scheme for authenticating collections (or aggregates) of products.

Systems and methods described here provide authentication for the origin of products during their physical absence from the inspector by authenticating the entity that claims ownership of those products. A digital identity origin pattern includes a serial number component and a challenge fingerprint component, with each portion being cryptographically generated. This concept on an abstract level is similar to that of a cryptographic challenge pair, although disclosed implementations include a time-driven or one-time, session-unique, variable to derive the resultant pattern, the transformation/manipulation of computer graphics objects, and a serial number to track different patterns that cover the same object. Unlike a physical counterpart, which is affixed to a physical object, a digital identity origin pattern is displayed on an Internet-connected computer device.

Verification of a digital identity origin pattern, and therefore the items the pattern claims ownership to, may be accomplished using an application installed on a mobile client (such as a smartphone or tablet with an Internet connection), a desktop application on the same Internet-connected machine that the pattern is displayed on, or any other computing device with an appropriately-equipped optical scanner or screen capture device. A verification exchange between a centralized authentication server and remote *(i.e.,* decentralized) clients creates a semi-distributed verification network. The digital identity origin pattern may serve as a proof-of-origin from not only a single manufacturer or reseller, but also a chain of ownership linking the original manufacturer to other authorized designers, suppliers, fabricators, distributors, *etc.,* involved in the object's creation, if any.

The digital identity origin pattern also differs from its physical counterparts in that its structure changes, either at a regular or irregular rate, as time passes and each origin pattern is valid only either during a fixed window of time, during the window of time before the next generation occurs, or during a unique session generated by a verification request. This prevents fraudulent entities (e.g., counterfeiters) from funneling a validly produced digital identity origin pattern to the fraudulent point-of-sale, because time will likely have run out before such an attack can succeed or a unique session token prevents others from attempting to verify such a fraudulent copy. Such scenarios, also known as Replay Attacks and Spoofing Attacks, are common issues faced by those attempting secure commerce through the Internet.

Implementations also include an aggregate origin pattern, which can be used to verify the authenticity of a collection of items, whether the items are individual objects or another collection. For example, a manufacturer may include several electronic devices in one box to be delivered to a retail store. The box may have an aggregate origin pattern that represents the collection of objects contained within the box. As another example, a retailer may sell a bundle that includes three different products - the bundle may have an aggregate origin pattern that includes the various products as a set or collection. Using an aggregate streamlines the verification of the collection, because one verification request can be used to verify the entire collection and because the collection can be verified without having to physically access each individual member of the collection.

For the intellectual property holder of objects and aggregates being discussed, benefits of using disclosed implementations include no overhead cost to guarantee the authenticity of products being sold, improved brand reputation, and e-commerce market growth. For the consumer, benefits of using disclosed implementations include the empowerment to verify the identity of a product's seller at a distance for personal surety and no cost to download or operate the client verification application. As another example, implementations provide authentication of a single product or a group of products in a stream-lined, cost-effective manner that is both easy to implement and open for all authorized parties to verify on physical products.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram that illustrates an example of a product authentication system, in accordance with disclosed implementations.
FIG. 2 is an example data diagram that illustrates an example of object origin pattern data used in authenticating products, in accordance with disclosed implementations.
FIG. 3 is a flow diagram of an example process for generating an object origin pattern in accordance with disclosed implementations.
FIG. 4 is a flow diagram of an example process for generating a serial number component for an origin pattern, in accordance with disclosed implementations.
FIG. 5 is an example data diagram that illustrates an example of origin pattern data that can be used in authenticating collections of objects, in accordance with disclosed implementations.
FIG. 6 is a flow diagram of an example process for generating an aggregate origin pattern in accordance with disclosed implementations.
FIG. 7 illustrates example aggregation classes, in accordance with disclosed implementations.
FIG. 8 is a flow diagram of an example process for generating a digital identity origin pattern, in accordance with disclosed implementations.
FIG. 9 is a flow diagram of an example process for verifying an aggregate origin pattern, in accordance with disclosed implementations.
FIG. 10 is a flow diagram of an example process for verifying a digital identity origin pattern, in accordance with disclosed implementations.
FIG. 11A and 11B illustrate example origin patterns, in accordance with disclosed implementations.
FIG. 12 is a flow diagram of an example process for verifying an object origin pattern, in accordance with disclosed implementations.
FIG. 13 is a flow diagram of an example fingerprint component verification process, in accordance with disclosed implementations.
FIG. 14 is a flow diagram of an example process for using time and location for verifying object origin pattern constraints, in accordance with disclosed implementations.
FIG. 15 is a flow diagram of an example process for determining an authenticity probability of an object origin pattern, in accordance with disclosed implementations.

### DETAILED DESCRIPTION

Implementations include systems and methods that use a unique combination of concept tools found in cryptographic challenge pairs, overt product tagging, product track-and-tracing, and time-based one-time password security, to allow members in a product's chain of ownership to protect their products and guarantee product quality to consumers. Individual objects (e.g., each individual instance of a part) may be protected by an object origin pattern. An object origin pattern may include a serial number component and a challenge fingerprint component. The serial number component may be text or character based or may appear in the form of a bar code. The serial number component may include public information and a portion generated through cryptographic manipulation of private and public information. The challenge fingerprint component may be a 2D barcode or a computer-generated 2D texture generated using a one-way hash of the combination of the public and private information. The challenge fingerprint component is a computer graphic object manipulated using private, cryptographically generated components of the serial number component. The object origin pattern is unique for each instance of an object, so that the manufacturer requests a new object origin pattern for each object. The object origin pattern is printed, etched, or otherwise affixed on the product it protects.

Without some way to track objects in groups at one or more steps in a supply chain, logistical challenges and complex transactions would bog down companies' operations. An anti-counterfeiting product tracking solution that claims ease of scanning and cost-effective lifecycle protection may support aggregation features during supply chain transactions. Such features are not easy implement, or even define, making aggregation an especially troublesome aspect for anti-counterfeiting solutions. Accordingly, implementations also provide for an aggregate origin pattern. An aggregate origin pattern accounts for the aggregation of many unique product identifiers (e.g., serial numbers from object origin patterns) and the establishes the identity of the legitimate owner of the collection of items. As used herein, a collection of items and an aggregation or aggregate of items are synonymous. Accordingly, an aggregate origin pattern may be generated based on the serial number component of the object origin pattern of multiple objects. Like the object origin pattern, the aggregate origin pattern is an optically-scannable cryptographic challenge pair. Aggregate origin patterns serve two purposes; to simplify the highly complex distribution of products through globalized supply networks, and to serve as the building blocks upon which those products' legitimate owner's identity rests. Such aggregate origin patterns are intended to be physically imprinted on or affixed to the objects' packaging, which may be accomplished by any number of methods, including laser-etching and ink printing. Packaging as used herein is intended to be interpreted broadly and may include retail packaging, containers used to transport objects *(e.g.,* a box of items or a container of boxes of items), or may even include another object made of or incorporating other objects *(e.g.,* a product that has component parts that, once incorporated into the product, cannot be easily accessed).

Digital identity origin patterns can help protect consumers against purchasing counterfeit goods (or diverted authentic goods from unauthorized sellers) over the Internet. Digital identity origin patterns are intended to be displayed via a computer display, e.g., Internet-connected computers or mobile devices. A system generating a digital identity origin pattern wraps all products/objects over which a digital entity claims ownership into an aggregate, series of aggregates, or hierarchy of aggregates, and generates a digital identifier unique to the entire entity. Thus, a digital identity origin pattern is derived from at least one aggregate origin pattern. Due to the ease of reproduction of digital information, however, such digital identity origin patterns are made sufficiently difficult to copy-and-paste to fraudulent identities' websites, merchant accounts, *etc.,* by using a time-based variable or session-unique token in the generation of the challenge pair, meaning that the digital identity origin pattern is valid for verification only within a certain window of time or by a certain verification requestor before it expires and changes structure.

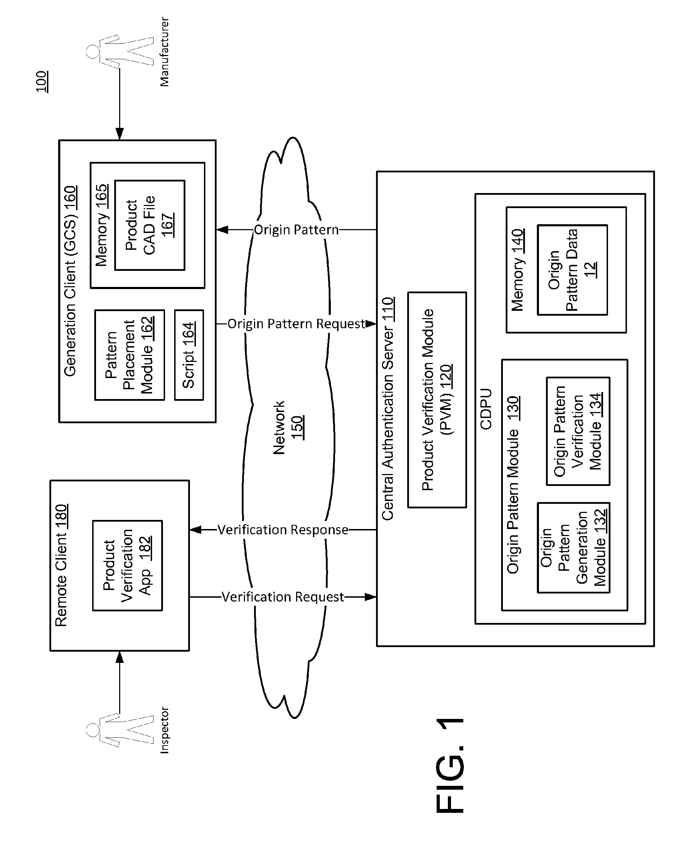

FIG. 1 illustrates an example block diagram of a product authentication system, in accordance with disclosed implementations. The object authentication system 100 can be embodied, for example, on one or more computing devices, such as central authentication server 110, remote client 180, and generation client (GCS) 160. Central authentication server 110 may be a mainframe, a server, a group of servers, a rack system, networked personal computers, *etc.* The central authentication server 110 may be a combination of two or more computing devices. For example, two or more computing devices may be physically or logically distinct from each other but in communication with each other via a communications network (not shown in FIG. 1), operating as central authentication server 110. The central authentication server 110 may be accessible to other computing devices via a network 150, such as the Internet.

The system 100 may also include a generation client (GCS) 160. The generation client 160 may be a personal computer, a laptop, a desktop, a tablet, a television with a processor, a server, a group of servers, *etc.,* used by a manufacturer. The generation client 160 may also include a combination of one or more computing devices. In some implementations, the generation client 160 may be a cloud-based computing system accessible by a manufacturer over a network, or may be installed on one or more computing devices physically located with the manufacturer. The generation client 160 may also be an Application Programming Interface (API) that is connected to a website, database, or other external application.

The system 100 may also include a remote client 180. The remote client 180 may be a smart phone, a tablet, a laptop, a wearable device, or any mobile device that includes capability to connect to the central authentication server 110 *(i.e.,* via the Internet, WiFi, or cellular data plan). The remote client 180 may also be a laptop, desktop, or other computer with capability to connect to the central authentication server 110. The remote client 180 may be used by an inspector, for example a consumer, customs official, auditor, *etc.,* to verify the legitimacy of an entity claiming ownership to a product or group of products under consideration.

The central authentication server 110 may include a Product Verification Module (PVM) 120 and a Central Database and Processor Unit (CDPU). The CDPU may send and receive information only through the PVM 120. The CDPU may include Origin Pattern Modules 130 and memory 140, which stores several categories of information for each object, aggregate, or digital identity origin pattern, to be described in more detail later.

To prove its ownership of an object (such as a part, product, or other article of manufacture) or an aggregate of objects remotely, a manufacturer may install and/or access the generation client 160. The generation client 160 may allow the manufacturer to register, thus receiving an identifier and permission from other specific entities in its supply chain to transact with them, and to begin to generate object, aggregate, or digital identity origin patterns. The generation client 160 may include an automatic script 162 for requesting and returning object origin patterns, aggregate origin patterns, or digital identity origin patterns from the PVM 120. In some implementations, the generation client 160 may include an interactive GUI, *e.g.,* the pattern placement module 162, that allows the manufacturer to pick the object or aggregate origin pattern's placement on the host object or product packaging respectively.

When the generation client 160 receives a request to generate an origin pattern, the generation client 160 may also receive circumstantial information, such as the current time, aggregate properties, *etc.* depending on the type of origin pattern requested. The current time will be used during the generation of a digital origin pattern to ensure that the digital identity origin pattern changes structure between time steps, and the aggregate properties may be used to determine an aggregate class, authenticate ownership for specific objects or groups of objects, *etc.* Once such information has been provided, the generation client 160 may send a generation request to the PVM 120. The generation request may be for an object pattern, an aggregate pattern, or a digital identity pattern. To protect the CDPU from outside attack, the PVM 120 may verify that it has received a valid request *(i.e.,* the signature on the encrypted request can have originated only from a registered manufacturer) before passing the generation request on to the CDPU. The CDPU then receives the generation request and creates the requested origin pattern. In some implementations, the origin pattern may be generated by an origin pattern generation module 132.

The CDPU may provide the requested origin pattern to the requesting generation client 160. In some implementations, the GCS may imprint the origin pattern into the smart CAD file 167. This step would presumably occur when the pattern is an object origin pattern and the object is to be 3D printed. In some implementations, the generation client 160 may also simply provide the manufacturer with a high-resolution bitmap image of the origin pattern. In some implementations, the generation client 160 may time stamp the origin pattern (e.g., the bitmap image), in order to thoroughly document the lifecycle of the origin pattern.

An origin pattern, regardless of its type, includes several specific pieces of identifier information, including a Private Owner Identifier (POID), which is a private password that provides ownership access to all of an owner's objects. For object origin patterns, the manufacturer is typically the first owner. For aggregate and digital identity origin patterns, the POID may represent a current owner of the object, rather than a manufacturer. The CDPU may assign a unique POID to any entity that registers using the generation client 160. Other identifiers include a Incremented Reference Number (IRN), which is a private identifier used to differentiate between object instances produced or aggregate instances generated by the owner, a First Owner Identifier Sequence (FOIS), which is a public identifier of that owner, and a Second Owner Identifier Sequence (SOIS), which is a public identifier of the previous owner or manufacturer in the object's supply chain. Using these identifiers, the origin pattern module 130 may generate a unique, publicly visible textual component, known as the Digitally Signed Serial Number (or DSSN) and a challenge fingerprint pattern for each object origin pattern.

For an object origin pattern, the IRN may be an identifier for each part or for each host part *(e.g.,* each instance of a part), depending on the implementation. In some implementations the IRN may be a Base-10 serial number to differentiate between multiple instances of the same product design. The IRN may be a sequence of arbitrary length. For example, the IRN may be incremented when an original owner, such as the manufacturer, authorizes another to manufacture the same part or when a change is made to the part. In some implementations, the IRN may be incremented for each instance of the object.

For an aggregate origin pattern or a digital identity origin pattern, the IRN may be an identifier unique to the aggregate of objects. In some implementations, the origin pattern module 130 may append the DSSNs of multiple objects together into a single character sequence and use that sequence as the IRN for the aggregate. In some implementations, the origin pattern module 130 may append other identifiers for each object in the aggregate. In a digital identity origin pattern, the IRN may also include a time nonce appended to the aggregate identifier(s) represented by the digital identity origin pattern. In some implementations, the IRN may be a unique number assigned to the aggregate origin pattern or digital identity origin pattern and identifiers for the object/aggregates covered by the aggregate origin pattern or digital identity origin pattern may be stored with the IRN.

In some implementations, the POID is a 128-bit sequence, the IRN is a sequence of arbitrary length, the FOIS and SOIS are each a 46 bit sequence, and the DSSN is dependent on the length of the message hash digest (256 bits if SHA-256 is used, for example). Other implementations may contain different identifiers, or the same identifiers but arranged in a different order. Also, the CDPU representation of these objects may include other data, such as the time and location of each incoming verification request, a list of non-supply chain owners, and the likelihood that an object has experienced some form of diversion or counterfeiting attack.

The system 100 may also include a remote client 180. When on-site with an object or an aggregate of objects, an inspector equipped with a smartphone, hand-held or stationary optical scanner, or other mobile computing device can authenticate the object or aggregate of objects almost instantly and for free. The inspector can perform this verification by running a no-cost application 182 installed on the remote client 180 provided by a developer of the central authentication server 110. For example, the inspector may locate the scanner or camera in communication with the remote client 180 in close proximity to the origin pattern. The application 182 may wait until a clear image of the origin pattern is in focus, and then examine the positions of distortion detection patterns, which may be provided with the origin pattern on the host object or packaging. In the event that the origin pattern is located on a curved surface or the camera is not held at a perfectly 'head on' orientation, the application may 're-distort' the origin pattern back into its original form.

If the distortion detection patterns are not present, or if any other component of the origin pattern is not present in its proper form, the individual may be prompted to try again. Only after a potentially valid origin pattern is present will the application send a verification request to the central authentication server, which prevents an attacker from spamming the security scheme by taking random pictures with no origin pattern present.

The application 182 may retrieve the serial number component from the origin pattern, temporarily store it, and time-location stamp the storage. The application 182 may send a verification request containing the serial number component and time-location stamp to the central authentication server 110, where the PVM 120 may apply verification tests to the origin pattern sent as part of the verification request. If the CDPU determines that the origin pattern is authentic, the central authentication server 110 may send a response back to the remote client 180 indicating such. The remote client 180 may also be notified if the origin pattern is not authentic. This may prevent the inspector from unknowingly purchasing, handling, or using an unauthorized copy of the object or objects.

In addition, the remote client 180 may be any computing device connected to the CDPU. Such clients may verify a digital identity origin pattern presented as part of a transaction taking place over the Internet. For example, an inspector using remote client 180 may request a digital identity origin pattern before purchasing one or more items online. The CDPU may provide the digital identity origin pattern. The remote client 180 may then send a verification request and the CDPU may verify the authenticity. If there is a problem in verifying the digital identity origin pattern, the CDPU may notify the inspector via the remote client 180. Thus, any person may verify goods purchased even if the person is not present with the goods and remote client 180 is not limited to mobile devices with cameras.

### Object Origin Pattern

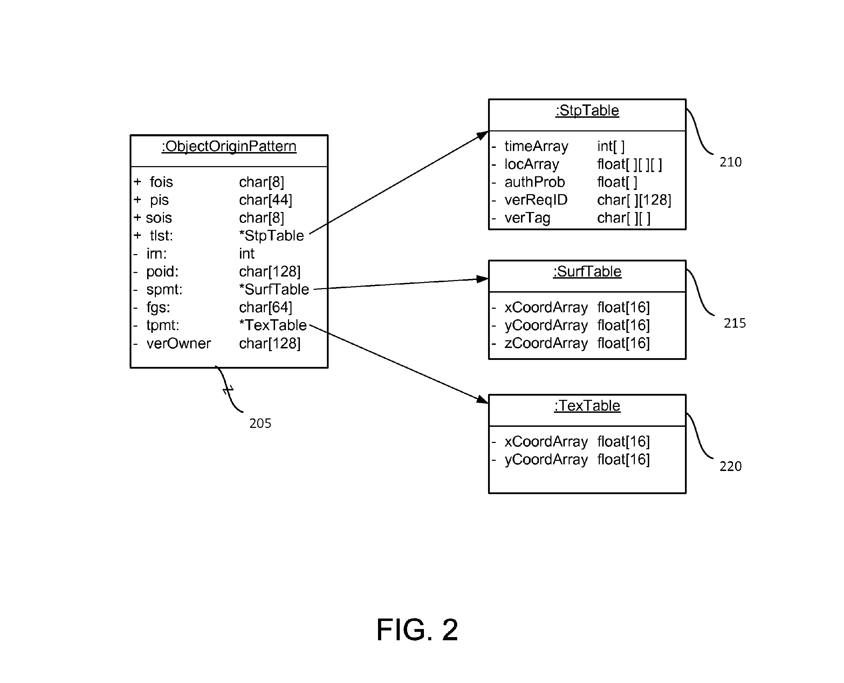

FIG. 2 is an example data diagram that illustrates an example of origin pattern data 12 that can be used in generating an object origin pattern for authenticating objects, in accordance with disclosed implementations. The ObjectOriginPattern data 205 in the CDPU may include the illustrated variables used to generate and verify an object origin pattern. It is understood that the format, names, and variables of FIG. 2 are one example only and implementations include other data layouts not illustrated that also include data used for generation and verification of an object origin pattern. As illustrated, some variables may point to other objects for increased processing efficiency, but it is understood that use of pointers is not required.

The data 205 for an object origin pattern may include a private or secret 128-character string called a Private Owner Identifier (POID). The POID may be thought of as a 128-character password that provides ownership access to all of an owner's products. Thus, each owner, whether an original manufacturer or someone else in the chain of ownership, has a unique POID. The POID may be generated when an owner registers using the generation client 160. The data 205 for an object origin pattern may also include a public owner identifier, also known as a First Owner Identifier Sequence (FOIS). The FOIS is a public identifier of the owner, and is thus the public counterpart to the private POID. Like the POID, the FOIS is unique to a owner, but may be printed in readable format on the product or part. The data 205 for an object origin pattern may also include a chain of ownership identifier, also known as the Second Owner Identifier Sequence (SOIS). The SOIS is the public identifier of the previous owner in the chain of ownership. Thus, the SOIS is null if the owner is the original manufacturer. If the original manufacturer authorizes a second manufacturer to produce a part, the second manufacturer may use the FOIS of the original manufacturer as the SOIS when the second manufacturer produces the object.

The data 205 for an object origin pattern may also include an IRN, or Incremented Reference Number. The IRN may be an identifier for each part or for each host part *(e.g.,* each instance of a part), depending on the implementation. The IRN may be of any length. In some implementations the IRN may be a Base-10 serial number to differentiate between multiple instances of the same product design. For example, the IRN may be incremented when an original manufacturer authorizes another to manufacture the same part or when a change is made to the part. In some implementations, the IRN may be incremented for each instance of a product.

The data 205 for an origin pattern may also include other data used to generate the challenge fingerprint. In such implementations, the data 205 may include a Fingerprint Generation Sequence (or FGS). The system may generate the FGS by appending the IRN and SOIS to the POID and hashing the resultant string. The system may use the FGS to generate a fingerprint component of the object origin pattern. The fingerprint component may be a barcode generated using the FGS, an image manipulated using the FGS, or a surface-texture pattern generated using the FGS. In some implementations, the data 205 may also include a Product Identifier Sequence (PIS). The Product Identifier Sequence may be an identifier for the specific object origin pattern, and may be generated by appending the (public) First Owner Identifier Sequence to the (private) Fingerprint Generation Sequence (FGS) and hashing the resultant string. The DSSN of an object origin pattern may be a concatenation of the FOIS, the SOIS, and the PIS.

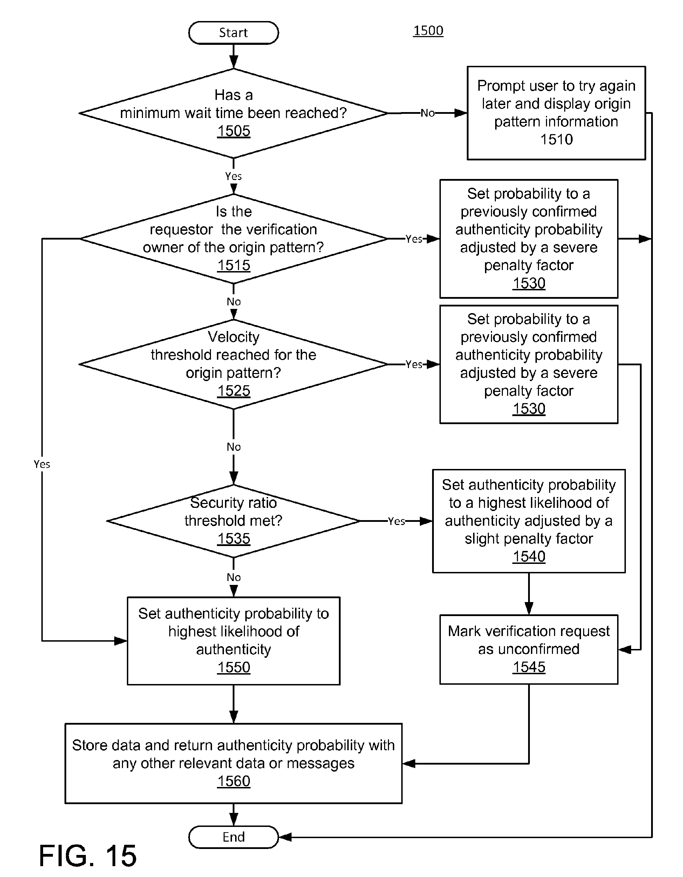

The data 205 for an origin pattern may also include a 128-character verification owner identifier, verOwner, which provides a particular verification requestor the authority to bypass the probabilistic authentication, described with regard to FIG. 15 herein, if that requestor is the verification owner of that object to which the origin pattern is affixed. In a sense, that user becomes the last link in the chain of ownership, although the user's privileges extend only to verification requests and not to intellectual property ownership of the object. The verification owner identifier can be updated upon the consent of the previous verOwner or the First Owner *(e.g.,* the owner of the FOIS), and may occur during commercial transactions. In some implementations, the verOwner may be an array, with a most current owner represented as the first (or last) entry in the array. In such an implementation, the system may track previous owners of the object.

In an implementation using a surface-texture pattern for the fingerprint component, the system may generate the fingerprint by transforming control vertices of a three dimensional surface, generating a texture pattern, and applying a linear mapping of the texture pattern to the transformed surface. In such an implementation, the system may use a first portion of the FGS to transform the control vertices of a three dimensional surface and a second portion of the FGS to generate the texture pattern. In such an implementation, the system may include surface parameter mapping table 215 and texture parameter mapping table 220, which both include arrays of random floating point numbers for each possible hexadecimal character input, e.g., each control vertex. The system may populate the arrays with random numbers upon creation of each instance of the table, and those numbers will remain constant for the origin pattern's lifespan. Of course, implementations are not limited to use of a surface-texture pattern, but it is offered as one example of data used to generate a fingerprint component.

In some implementations, rather than storing the data needed to regenerate the fingerprint component, the object origin pattern data 205 may store the fingerprint component, or may store a pointer to the fingerprint component. In such an implementation, storage of the fgs, tmpt, and spmt is optional or may be replaced by pointers to the generated fingerprint component.

In some implementations, the object origin pattern data 205 may include time-location information (TLST), which may be used to record and verify verification requests for the object origin pattern. In the example of FIG. 2, the time-location information is stored in a table, with one entry for each new legitimate verification request and an entry generated at the time the object origin pattern is generated. The time-location information may track various information, such as the time of a verification request, the location (latitude/longitude) the request was made at, the likelihood that a verification request is valid or invalid, a likelihood that the host object has an authentic origin pattern, a verification requestor ID, *etc.*

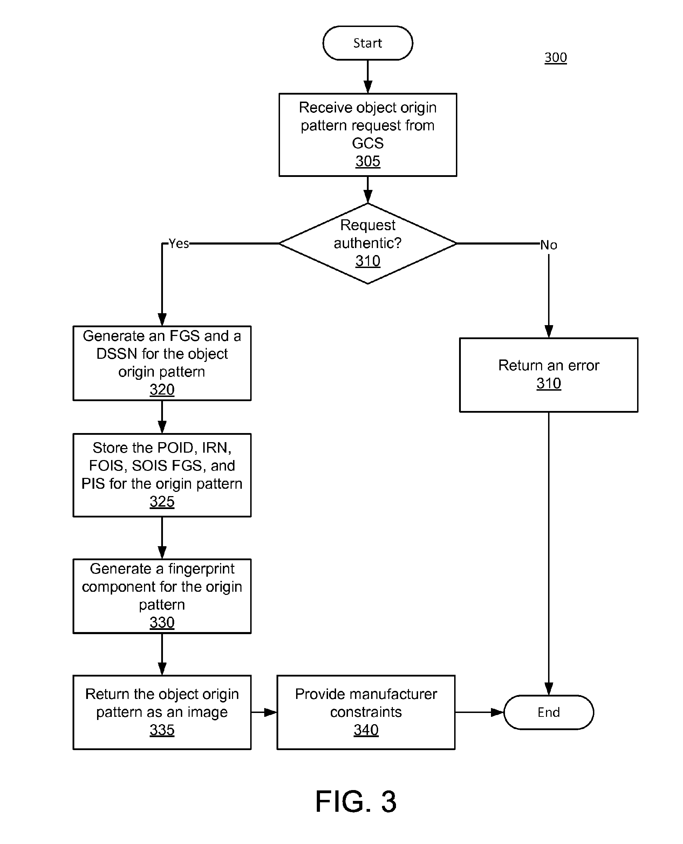

FIG. 3 is a flow diagram of an example process 300 for generating an object origin pattern, in accordance with disclosed implementations. Process 300 may be performed by a central authentication server, such as central authentication server 110 of FIG. 1, to generate a new object origin pattern. For example, when a manufacturer wants to apply an object origin pattern on a new part, the manufacturer may use the generation client *(e.g.,* GCS of FIG. 1) to request a new object origin pattern for the new part or a new instance of the part, depending on the implementation. In some implementations, the manufacturer may request a new object origin pattern for each object to be tracked.

Process 300 begins when the Central Processing Unit receives a request from the manufacturer, for example through the manufacturer client, for a new object origin pattern (305). The request may include parameters including a private owner identifier (POID), a product identifier (IRN) for the object, a public owner identifier (FOIS) and a chain of ownership identifier (SOIS) that will correspond with the part. These identifiers may be provided by via a generation client, such as client 160 of FIG. 1. The request and its parameters may be communicated via an encrypted file. After receiving the request, the central authentication server may authenticate the request (310). In some implementations, the authentication may be performed by a trusted central client, such as PVM 120 of FIG. 1. The central authentication server may determine whether the request is authentic by determining whether the POID in the request has been registered with the central authentication server. For example, the central authentication server may determine whether the POID exists in a data store, such as in origin pattern data 12 of FIG. 1. In implementations where the request is encrypted, the central authentication server may also verify a signature on the encrypted file originating from a registered owner. Of course, other methods of verifying that the request originated from a registered owner may be used. If the request is not from a registered owner (310, No), the central authentication server may return an error (315) indicating the request could not be authenticated and process 300 ends without generating an origin pattern. The authentication verification protects the central authentication server from unauthorized requests for origin patterns.

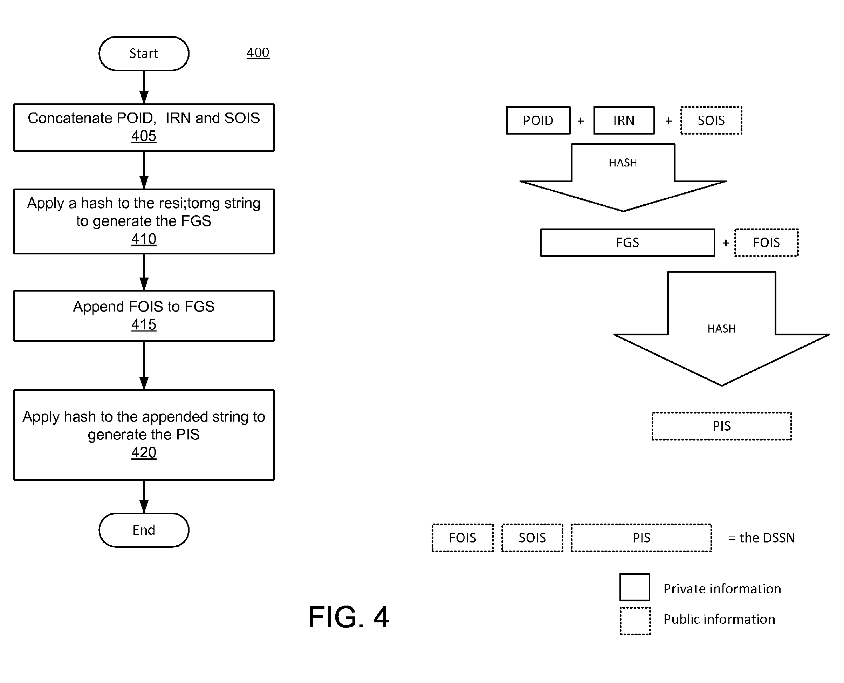

If the request is authenticated (310, Yes), the central authentication server may proceed to generate a Fingerprint Generation Sequence (FGS) and a serial number or Digitally Signed Serial Number (DSSN) for the object origin pattern (320). The generation of the FGS and DSSN may be performed, for example, by an origin pattern generation module, such as module 132 of FIG. 1. The FGS and DSSN are based on the other parameters supplied in with the request, as will be explained in more detail with regard to FIG 4. The central authentication server may store the parameters provided in the request, the FGS, and the PIS, in a data store (325) so that this information can subsequently be used to verify an origin pattern. In some implementations, the central authentication server may store the DSSN, or may store the data elements that make up the DSSN. The data may be stored, for example, in object origin pattern data 205 of FIG. 2.

The central authentication server may then generate a fingerprint component for the origin pattern (330). The fingerprint component is a cryptographic manipulation, based on the FGS, of computer graphic objects, such as barcodes, 3D surfaces with a texture applied, *etc.* For example, as described above, the central authentication server may manipulate control vertices of a 3D surface using a portion of the FGS and may use a remainder of the FGS to generate a texture applied to the manipulated surface. The resulting pattern may be provided, in whole or cropped, as a 2D image that serves as the fingerprint component. In some implementations, the central authentication server may store the fingerprint component, for example as an image file that is part object origin pattern data 205 or origin pattern data 12 generally, after generation. The central authentication server may return the origin pattern, which includes the serial number component and the fingerprint component to the requesting client (335). The object origin pattern may be returned as an image file that can be affixed *(e.g.,* printed, etched, etc.) in 2D or 3D to objects produced by the manufacturer/owner. In some implementations, the system may optionally allow the manufacturer to provide constraints for the object origin pattern (340). The constraints may limit the geographical area or time window where the object origin pattern is valid. In some implementations, the constraints may be specified for a batch of object origin patterns so that the manufacturer does not need to provide the constraints each time an object origin pattern is generated. Process 300 then ends, having generated an origin pattern and the data used to verify the origin pattern at a later date.

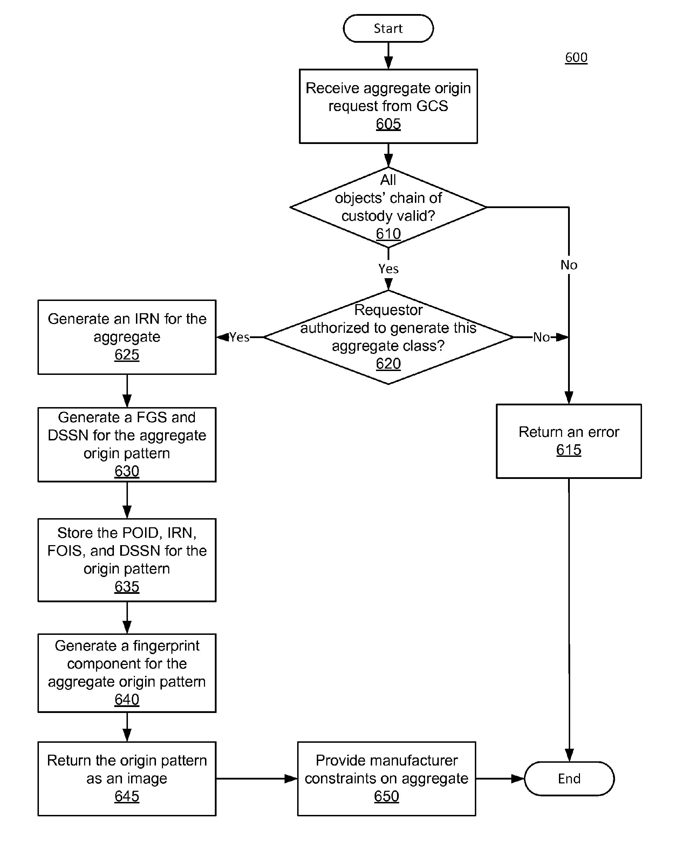

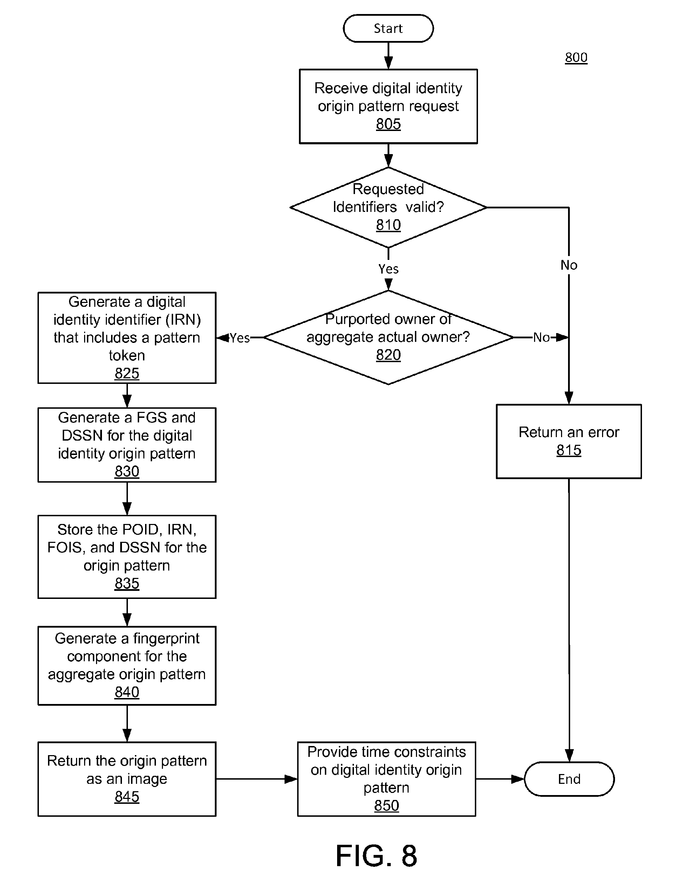

FIG. 4 is a flow diagram of an example process 400 for generating a serial number component of an origin pattern, in accordance with disclosed implementations. Process 400 may be performed by a central authentication server as part of step 320 of FIG. 3, step 630 of FIG. 6, or step 830 of FIG. 8. In some implementations, process 400 may be performed by an origin pattern generation module. Process 400 may generate a private sequence, the FGS, and a public sequence, the DSSN, used to determine whether an object origin pattern is authentic. The FGS and DSSN are each unique to each link in the chain of ownership for the part or collection. Process 400 may begin by concatenating the POID, IRN, and SOIS (405), which were provided as part of the generation request. The central authentication server may then apply a cryptographic hash function to the resulting string (410). For example, the Secure Hash Algorithm (specifically, the SHA-2 family) is a cryptographic function developed by the National Security Agency and both proprietary and open-source implementations of SHA-2 exist. One such example of open-source code available for SHA-2 is the PolarSSL code library. Of course any cryptographic hash function may be used. Applying the cryptographic hash function generates the FGS. In some implementations, the FGS may be a 64-character hexadecimal sequence, but implementations are not limited to 64-characters. The central authentication server may then concatenate the FOIS to the FGS that was just generated (415). The central authentication server may then apply the hash function to the resulting string to generate a product identifier sequence, or PIS (420). The PIS, when concatenated with the FOIS and SOIS make up the serial number, or DSSN, for the origin pattern. As illustrated in FIG. 4, the DSSN may be comprised of public information represented as a textual component of the origin pattern, which can be used to verify the authenticity of the challenge fingerprint component. In some implementations, the serial number component may be a bar code rather than readable text.

As illustrated in FIG. 4, the DSSN may include three elements. The first element may be a First Owner Identifier Sequence (FOIS). The FOIS is the public identifier of the manufacturer. Like the Private Owner Identifier (POID), the FOIS is unique to an owner, but the FOIS is known to the public and may be printed or displayed in readable form. In some implementations, the FOIS may be in Base 58, which is an alphanumeric sequence that can include any lowercase and uppercase letters and numbers 2 through 9, but omitting the characters '0', '0', '1', and '1' to avoid any reading confusion. In some implementations, the FOIS may be 8 characters long. Of course, it is understood that a longer or shorter FOIS may be used.

The second element in a DSSN is the Second Owner Identifier Sequence (SOIS). The SOIS is the public identifier of the previous owner in the chain of ownership. Thus, the SOIS is null if the manufacturer is the original manufacturer of an object origin pattern. The SOIS may be also a constant value that identifies the pattern as an aggregate origin pattern or a digital identity origin pattern. If the original manufacturer authorizes a second manufacturer to produce a part, the second manufacturer may use the FOIS of the original manufacturer as the SOIS when the second manufacturer produces the part. In some implementations, the SOIS may be 8 characters long and may be in Base 58. Of course, it is understood that a longer or shorter SOIS may be used, so long as its length matches that of the FOIS.

The last element of the DSSN is a Product Identifier Sequence (PIS). The Product Identifier Sequence may be an identifier for the specific origin pattern, and may be generated by appending the (public) First Owner Identifier Sequence to the (private) Fingerprint Generation Sequence (FGS) and hashing the resultant string. In some implementations, the PIS may also be in Base 58. Because the DSSN is visible, in some implementations, dashes or spaces may be used between the three elements for readability. For example, a DSSN may have the format below:
3KKA6Xoj-00000000-7EFkmHA9seqYH1onnGZRvdSBqidep1F4PtPGCnhug0bs

In the example above, the PIS is a 44-character sequence, and this identifier is unique to each host object, each collection, or each digital identity request, depending on the implementation. The central authentication server may generate the PIS by appending the public owner identifier (e.g., FOIS) to the FGS of that origin pattern and rehashing this string using SHA-256, as described above with regard to FIG. 4. The resulting digest is then converted to Base 58, which provides the final 44-character, signed identifier. FIG. 4 illustrates the generation of a DSSN. Although the DSSN above is generated using the FOIS+SOIS+PIS, it is understood that these elements may be appended in any order, so long as the order is consistent across implementations. It is also understood that the SHA-256 hash algorithm is provided as one example only and other hash algorithms may be used.

### Aggregate Origin Pattern

An aggregate origin pattern contains the same types of identifier information as an object origin pattern *(e.g.,* POID, FOIS, SOIS, FGS) and is subject to the same cryptographic operations as those described above, but with some differences. For example, the Incremented Reference Number (IRN) of an aggregate origin pattern may be defined by appending an identifier for each of its constituent items. The items may be objects (e.g., parts/products) or another aggregate. In some implementations, the identifier may be a DSSN generated for each item, for example as part of generating an object origin pattern as described above. In some implementations, the IRN of an aggregate may be a unique identifier, and the system may separately store the identifiers of constituent items, e.g., via data 520. In some implementations, the item(s) included in the aggregate can be independently verified for authenticity based on their identifiers. In some implementations, this may be done as part of the generation of an aggregate, so that each object is verified prior to inclusion in the aggregate. In some implementations, the identifier may just be an identifier unique to the object, which is not a DSSN. In such implementations, the items in the aggregate cannot be independently verified as authentic prior to inclusion in the aggregate.

Using a concatenation of identifiers for items included in the aggregate allows a supply chain member to re-use all other non-instance-level-specific identifiers while generating an origin pattern that is unique to the aggregate. Because the output of a cryptographic hash function is highly sensitive to changes in the input, the system may standardize the order of appending item identifiers for any conceivable circumstance. Popular cryptographic hash functions can easily handle large input character sets, for example DSSNs of thousands, millions, or billions of items, even when the DSSN is several hundred bits. For example, SHA-256, a particular implementation of the Secure Hash Algorithm 2, has a maximum message input length of 2⁶⁴⁻¹ bits, or 2.3 exabytes-almost a billion times larger than the largest example input described above. However, the increasing amount of time required to retrieve all necessary DSSNs from the CDPU and to compute the hash function may lead to a preference, in some scenarios, for avoiding regenerating aggregate origin patterns during transactions or verifications. These scenarios will be described in more detail below.

In some implementations, aggregate origin patterns can be outwardly differentiable from object origin patterns in that the system assigns their SOIS a constant value. This occurs because the items making up a collection do not necessarily all come from one previous supply chain entity. In some implementations, where the 46 bit FOIS and SOIS are written in Base 58 (to allow some level of human readability), the SOIS may be given a value that indicates the origin pattern is an aggregate pattern, such as "AGGRGT00."

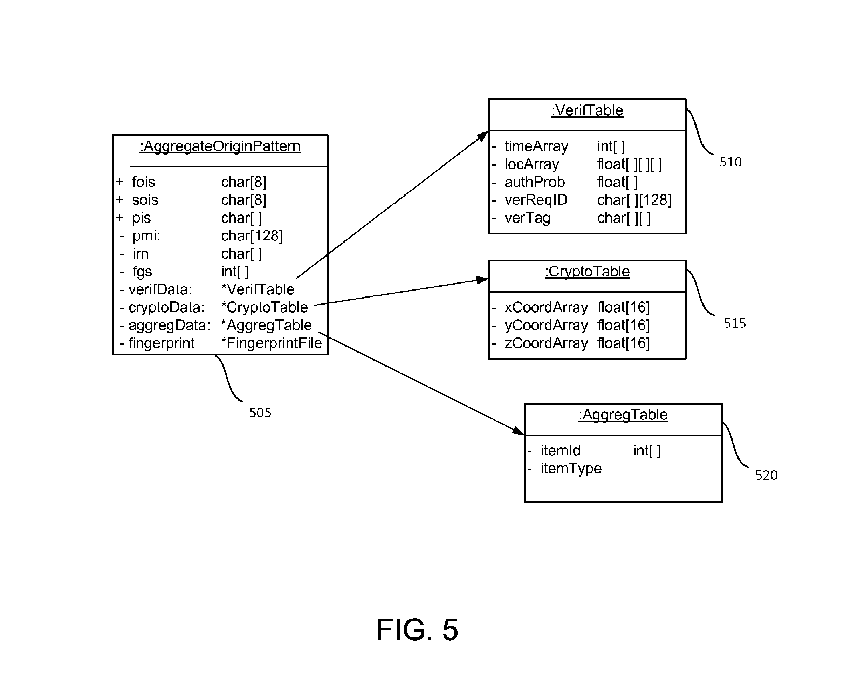

FIG. 5 is an example data diagram that illustrates an example of origin pattern data 12 that can be used in authenticating aggregates of objects, in accordance with disclosed implementations. The data 505 for an origin pattern may include the POID, IRN, FOIS, SOIS, FGS, and DSSN data fields mentioned above. Also included may be pointers to objects which are tables for construction or storage of the cryptographic fingerprint component 515, and verification history of the origin pattern 510. In some implementations, the system may store the generated fingerprint component rather than data 515 used to construct the fingerprint component. In some implementations, the origin pattern data 12 may also include a verification owner identifier for the aggregate. The verification owner may represent the current owner of the aggregate, which may change as ownership passes from one entity to another (e.g., through sale or license). In a sense, that user becomes the last link in the chain of ownership, although the user's privileges extend only to verification requests and not to intellectual property ownership of the object. The verification owner identifier can be updated upon the consent of the previous verification owner or the First Owner *(e.g.,* the owner of the FOIS), and may occur during commercial transactions. In some implementations, the verification owner may be structured to keep a history of the owners. For example, the verification owner may be an array or linked list, with a most current owner represented as the last entry in the array (or the first entry, depending on implementation).

In some implementations, the data 505 may also include pointers to constituent aggregate items 520. In some implementations, the aggregate items may be pointers to the data 505 or 205 of each item (*e.g.,* an object origin pattern data 205 or aggregate origin pattern data 505). In some implementations, the aggregate items 520 may be a list of identifiers (*e.g*., identifiers for each object that need not have an associated object origin pattern).

It is understood that aggregate origin pattern data 505 could also be used to store a digital identity origin pattern with minimal changes. For example, a digital identity origin pattern may list one or more object identifiers or one or more aggregate identifiers, for example using the aggregData, being verified by digital identity origin pattern. In addition, for a digital identity origin pattern, the data 505 may include a pattern token or a pointer to the pattern token. The pattern token may be a string that represents a time nonce or a session identifier, which is used to ensure the digital identity origin pattern has a limited window of validity.

In some implementations, the cryptographic challenge pattern data 515 may include any data needed to re-generate the challenge fingerprint portion of the aggregate origin pattern. In the example of FIG. 5, the cryptographic challenge pattern data 515 illustrates data used to generate and transform a 3D surface-texture object, but implementations may include other cryptographic challenge data and are not limited to the data items of FIG. 5. It is also understood that in some implementations, the cryptographic challenge pattern data 515 may store the generated fingerprint component, so that the system need not re-generate the component for each verification request.

FIG. 6 is a flow diagram of an example process 600 for generating an aggregate origin pattern in accordance with disclosed implementations. Process 600 may be performed by a central authentication server, such as central authentication server 110 of FIG. 1, to generate a new aggregate origin pattern. For example, when an entity, such as a manufacturer or other owner, wants to group physical objects together, for example in a large box for shipping or in a lot for sale via the internet, the entity may use the generation client *(e.g.,* GCS of FIG. 1) to request a new aggregate origin pattern. As another example, a reseller or a consumer using an online marketplace, may desire to offer a group of items for sale. These entities may aggregate items to make use of a digital identity origin pattern, as described herein below.

Process 600 begins when the Central Processing Unit receives a request from the requesting entity, for example through the generation client, for a new aggregate origin pattern (605). The request may be provided via a generation client, such as client 160 of FIG. 1. In some implementations, the request and its parameters may be communicated via an encrypted file. The request may include parameters including a private owner identifier (POID), a public owner identifier (FOIS), and a list of aggregate items to be included in the aggregate. Aggregate items may be objects or other aggregates. In some implementations, the list of aggregate items may be a list of unique identifiers, e.g., identifiers that uniquely identify physical objects. In some implementations, the object identifier may be a DSSN that uniquely identifies either an object or an aggregate of objects. In some implementations, objects may have a unique identifier that is not a DSSN, but aggregates of objects may also be identified using a DSSN.

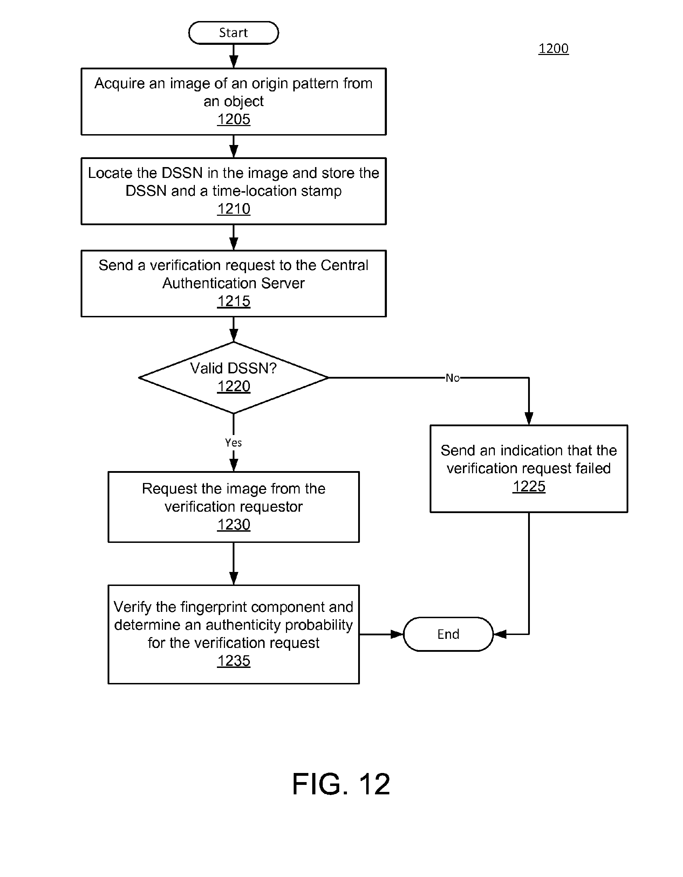

After receiving the request, in some implementations, the central authentication server may perform a series of validation tests. In some implementations, the verifications may be performed by a trusted central client, such as PVM 120 of FIG. 1. For example, the central authentication server may optionally determine whether the aggregate items in the request *(e.g.,* all objects/aggregates to be included in the requested aggregate) are valid (610). This may be referred to as a chain of custody verification. In one aspect, the chain of custody verification may determine whether any item to be included in the aggregate has been flagged as fraudulent. Items (whether objects or aggregates) may go through a verification request process, as described in more detail with regard to FIGS. 12-15 below, that may flag the item as possibly fraudulent. In some implementations, a data store may include a field or data items that indicate an object is possibly fraudulent. In some implementations the data store can include an authentication probability that is used to mark an item as fraudulent, for example, if the probability falls below a threshold. In some implementations, the system may perform a verification request for the items, e.g., using the object origin pattern of the objects (or the aggregate origin pattern of any aggregates) to be included in the aggregate. If any of the items have been flagged as fraudulent or have a verification request failure (610, No), the central authentication server may return an error (615) without generating an origin pattern.

In addition to being flagged as fraudulent, as described below, the chain of custody verification may also determine whether an aggregate item has been identified in another aggregate. If an aggregate item is identified in another aggregate, the chain of custody for that aggregate item is not valid because one physical item cannot be in two places *(e.g.,* in two different aggregates) at once. Thus, this test ensures that there is no confusion about the ownership of the aggregate item. Of course, aggregates may be nested, so that an object may be included in an aggregate that is included in another aggregate, effectively including the object in two aggregates. But in this scenario, the object is itself only identified in a first aggregate. This does not violate the chain of custody. Put another way, the second aggregate identifies the first aggregate, not the object itself, thus the object is not two places at once. Like an object, one aggregate may only be identified in one other aggregate, although any degree of nesting of aggregates may occur. If any of the aggregate items are identified in more than one aggregate, the chain of custody is not valid (610, No), and the central authentication server may return an error (615) without generating an aggregate origin pattern.

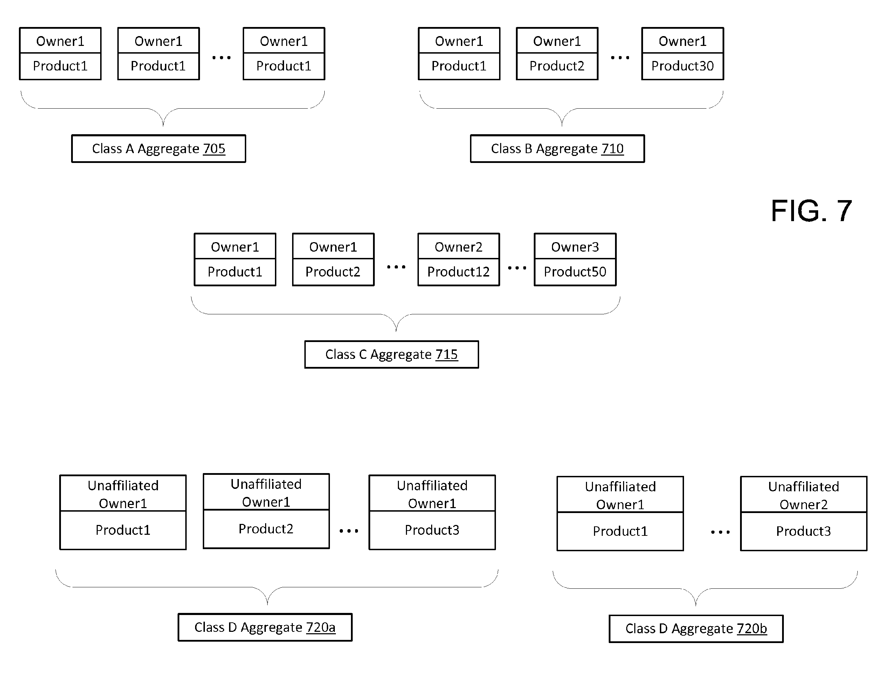

The central authentication server may also verify whether the requestor is authorized to generate the type of aggregate class requested (620). In some implementations, the system may determine the aggregation class based on the list of items to be aggregated. The system may include five classes of aggregation. The classes may enable the system to prevent a supply chain member from claiming ownership of objects it is not authorized to distribute, or to mix products in unauthorized manners. Aggregation classes help the CDPU avoid the process of validating the list of object origin patterns included in the aggregate one-by-one and validating the supply chain member's ownership. Such a process is inefficient and even impossible at large scales and small timeframes. Thus, by defining separate classes of aggregates, the system simplifies the authentication process. FIG. 7 illustrates example aggregation classes.

The first class of aggregate, to be referred to here as a Class A aggregate 705, includes any number of instances of a single design owned exclusively by a single entity. In other words, Class A aggregate 705 includes one owner and one object, although any number of instances of that object. Assuming this also to be intended for transactions within a single region or market, a Class A aggregate is the simplest of supply chain ownership cases. The aggregate origin pattern requesting a particular Class A aggregate may choose to restrict that aggregate or any of its object components from being later re-aggregated into another particular Class A aggregate. Such a restriction will be considered a special subcase of a Class A aggregate.

The second class of aggregate, to be referred to here as a Class B aggregate 710, includes any number of instances of any number of designs owned exclusively by a single entity. In other words, class B aggregate 710 includes one owner and any number of objects (e.g., instances of any number of different objects). Class B aggregates 710 may be intended for transactions within multiple regions or markets. A Class B aggregate may represent any or all of the objects originating from the aggregate's owner, such as all the different coins generated by the U.S. Mint. The requestor of a particular Class B aggregate may choose to restrict it or any of its component objects from being later re-aggregated into another particular Class B aggregate. Such a restriction will be considered a special subcase of a Class B aggregate. Because Class A and Class B aggregates are owned by a single entity, these classes are base aggregates.

The third class of aggregate, to be referred to here as a Class C aggregate 715, includes any number of instances of any number of designs owned by any number of entities upstream of the aggregate's point in the supply chain. Since multiple entities are passing ownership of their objects to a new entity (the creator of the Class C aggregate), that new entity must be authorized by all previous entities to include their objects in its aggregate. Such an aggregate may be analogous to an automotive O.E.M. grouping car seats from one supplier and brake pads from another supplier into its factory inventory. In some implementations, all of those previous entities may select their authorized downstream partners from a menu of all possible choices, and may limit ownership to authorized partners not just one step downstream, but also multiple or even all steps downstream in a supply chain. This forward-facing limitation capability, combined with the backward-facing transparency capability this security scheme enables, allows inspectors at any point in an object's lifecycle to verify its authenticity by verifying its supply chain, as described below.

The fourth class of aggregate, to be referred to here as a Class D aggregate 720, contains any number of instances of any number of designs owned previously by any number of entities who may not be affiliated in any way or are not explicit supply chain or business partners with the aggregate owner. This is not to suggest that the aggregate owner has access to these objects unlawfully or unfairly. For example, after the point of sale to the consumer an object may be part of a Class D aggregate simply by way of being part of any particular consumers' possessions. For example, a consumer may be selling a used wristwatch and a pocket calculator in an online marketplace. The wristwatch and calculator may comprise a Class D aggregate owned by that consumer as the seller. In virtually all scenarios, a Class D aggregate contains objects formerly contained by Class A, B, or C aggregates, and while some of their forward-facing limitations may carry over to a Class D aggregate, the point-of-sale generally represents a transition from more rigid supply-chain-based rules of authentication to more flexible consumer-based rules.

The fifth and final class of aggregate, to be referred to here as a Class E aggregate, contains any number of sub-aggregates represented by Class A, B, C, or D aggregates. Aggregate hierarchies may be built up by grouping Class E aggregates into other Class E aggregates, as well.

Returning to FIG. 6 at 620, the central authentication server may determine whether the requestor is authorized to generate requests by determining constraints on any aggregate items identified in the list of items to be included in the requested aggregate. In other words, the central authentication server may look for aggregate constraints and determine whether the current request complies with the constraints. The concept of aggregate classes allows the central authentication server to determine on an aggregate item level whether or not the previous supply chain owners have authorized the current aggregate requestor to include the aggregate item in an aggregate class of the type currently under consideration. The aggregate constraints may be stored, for example, in a data store that tracks the identifiers for an aggregate (e.g., stored with the IRN, DSSN, *etc.* of the aggregate). In addition, previous supply chain owners may place constraints on objects about which aggregate classes the object may be included in. Such object constraints may also be included in a data store that tracks data for the object. Such constraints may be verified prior to generation of the aggregate so that constraints for a successful aggregation need not be verified again. In other words, the central authentication server can avoid running through complex matrices of combination scenarios to determine whether or not the aggregate origin pattern requestor is authorized to combine certain items (or even own them at all).

Whenever a less-restricted aggregate class is paired with a more-restricted aggregate class (such as Class C and Class A, respectively), the central authentication server checks to make sure the less-restricted aggregate is not in violation of any restrictions written into the more-restricted aggregate. This ensures no authorization conflicts occur during the generation of a valid aggregate origin pattern. Special subcases of Class A or B aggregates that define limitations on a more specific level than the entity-level may be considered if they are present; otherwise, there is no need for the central authentication server to check on an item-level basis. The requestor authorization process therefore rises in computational time and resources at the rate of at most O(logN) rather than O(N²), and demonstrates the value of defining aggregate classes.

Just as only one entity may own an individual object, only one entity may own a Class A, B, C, or D (and often E) aggregate at a time. No splitting of object ownership amongst parties may occur at this fundamental level, but new and more complex rules may be written over top of this during transaction events and at the super-aggregate (Class E) level. Aggregate ownership may be stored in the data store. If the requestor is not authorized to generate the aggregate (620, No), the central authentication server may return an error (615) without generating an aggregate origin pattern.

If the requestor is authorized to generate the requested aggregate (620, Yes), the central authentication server may generate an identifier (e.g., the IRN) for the aggregate (625). In some implementations, the central authentication server may append the identifiers of the items to be included in the aggregate to generate the aggregate identifier. The order of appending may be standardized, such as aggregate identifiers appended ahead of object identifiers, and each identifier in numerical order. For an aggregate origin pattern, the IRN may also be referred to as the private aggregate identifier. The central authentication server may proceed to generate a Fingerprint Generation Sequence (FGS) and a serial number or Digitally Signed Serial Number (DSSN) for the aggregate origin pattern (630). The generation of the FGS and DSSN may be performed, for example, by an origin pattern generation module, such as module 132 of FIG. 1. The FGS and DSSN are based on the other parameters supplied in the request, as explained in more detail above with regard to FIG 4. The DSSN for an aggregate origin pattern may be referred to as the public aggregate identifier. The central authentication server may store the parameters provided in the request, the FGS, and the PIS, which is part of the DSSN *(i.e.,* the serial number), in a data store (635) so that this information can subsequently be used to verify the aggregate origin pattern. The data may be stored, for example, in a structure similar to data 505 of FIG. 5, although this example is for illustration only. If the aggregate identifier is not a concatenation of identifiers for constituent items, the identifiers of the constituent items may also be stored. The central authentication server may then generate a fingerprint component for the aggregate origin pattern (640). The fingerprint component is a cryptographic generation/manipulation, based on the FGS, of computer graphics objects, such as barcodes, 3D surfaces with a texture applied, *etc.*

The central authentication server may return the origin pattern, which includes the serial number and the fingerprint component to the requesting client (645). The aggregate origin pattern may be returned as a 2D image file that can be affixed to packaging for objects, whether produced by the requestor or another manufacturer. In some implementations, the system may optionally allow the requestor to provide constraints for the aggregate (650). Aggregation constraints may include, but are not limited to, which manufacturers or other owners (*e.g*., identified by FOIS), may include the object in an aggregate, what classes of aggregates the object may be included in, time constraints *(i.e.,* aggregation may occur only within a specified timeframe), location constraints *(i.e.,* aggregation may occur only in a specified geographic area), *etc.* In some implementations, establishing downstream limitations, or defining which entities are authorized to possess and aggregate particular objects or aggregates of objects, can be defined by the current owner as a series of menu selections from all possible partner entities. These selections may be recorded by the central authentication server and become the basis of verification tests performed when an aggregate or object is identified for inclusion in an aggregate. These constraints may be stored in a data store for each object, for example, origin pattern data 12 or some other data store. Process 600 then ends, having generated an origin pattern and the data used to verify the origin pattern at a later date.

### Digital Identity Origin Pattern

Digital identity origin patterns, as the name suggests, are configured for presentation through digital means; such patterns are not meant to authenticate individual items on-site, since that task can be accomplished with an object origin pattern. Rather, digital identity origin patterns are meant to address the issue of authenticating an entity in possession of an object or an aggregate of objects when said objects are not physically present for inspection. Digital identity origin patterns are of the same construction and generation/verification processes as object origin patterns and aggregate origin patterns.

Due to the complexities that aggregation introduces into the ownership of objects and the supply chain agreements between owners who transact these objects, one cannot verify the authenticity of another entity without verifying the authenticity of the objects and aggregates that entity makes claim to. In the case of only one object being in the possession of an owner, a "wrapper" Class A or D aggregate (an aggregate of one object) may be created to contain the object and to serve as the input to the creation of the digital identity origin pattern. Therefore, it is understood that in some implementations the central authentication server may create a digital identity origin pattern only on top of valid aggregate origin patterns.

A problem inherent to the security of information transferred between computers through the Internet is the ease of that information's reproduction by unauthorized parties. This is no less true for a digital identity origin pattern, where a scammer or vendor of counterfeit goods on a large, web-based marketplace may try to "copy-and-paste" a legitimate owner's origin pattern in an attempt to draw customers away. More specifically, such an attacker may attempt a "replay" or "spoofing" attack by requesting the digital identity origin pattern to be displayed on the legitimate owner's site and then copying what is returned.

These attacks may be made sufficiently difficult through the inclusion of a time-based or session-based variable to the digital identity origin pattern's construction. Defining a time-based or session-unique pattern token allows for unique origin patterns to be created upon each request. The token may be a one-time sequence that is appended to the message input to a cryptographic hash function. For example, the token may be a time-based token based on the number of seconds or milliseconds elapsed since an arbitrary starting point. These time-based origin patterns may be valid for only a certain window of time- preferably one that is just long enough for a valid requestor to verify the origin pattern but one that is too short for an attacker to copy and potentially present to a valid requestor. As another example, the token may be a session-based token based on an identifier associated with an established secure connection. Such an identifier may be valid only as long as the secure connection is active. In some implementations, some other form of token may be used in place of a time nonce. Other implementations may define regular time intervals for regenerating digital identity origin patterns and defining set windows of time within which said origin patterns are valid for verification.

FIG. 8 is a flow diagram of an example process 800 for generating a digital identity origin pattern in accordance with disclosed implementations. Process 800 may be performed by a central authentication server, such as central authentication server 110 of FIG. 1, to generate a new digital identity origin pattern. For example, when an entity wants to offer an object or a group of objects for sale via the Internet, whether a manufacturer, a reseller, or a consumer using an online marketplace, the entity may use the generation client *(e.g.,* GCS of FIG. 1) to request a new digital identity origin pattern.

Process 800 begins when the Central Processing Unit receives a request from a client for a new digital identity origin pattern (805). The request may be provided via a client, such as generation client 160 of FIG. 1. In some implementations, the request and its parameters may be communicated via an encrypted file. The request may have parameters including a public owner identifier (FOIS), one or more object identifiers or one or more aggregate identifiers and, optionally a pattern token, such as a time nonce or session token. The pattern token may be a one-time sequence that is appended to the message input to a cryptographic hash function, that limits the window of validity of the digital origin pattern. For example, the pattern token may be based on the number of seconds or milliseconds elapsed since an arbitrary starting point or on a session identifier that is valid only while the session is active. The time-based token allows for a unique digital origin pattern to be created upon each request. The aggregate identifiers may be the DSSN of an already generated aggregate.

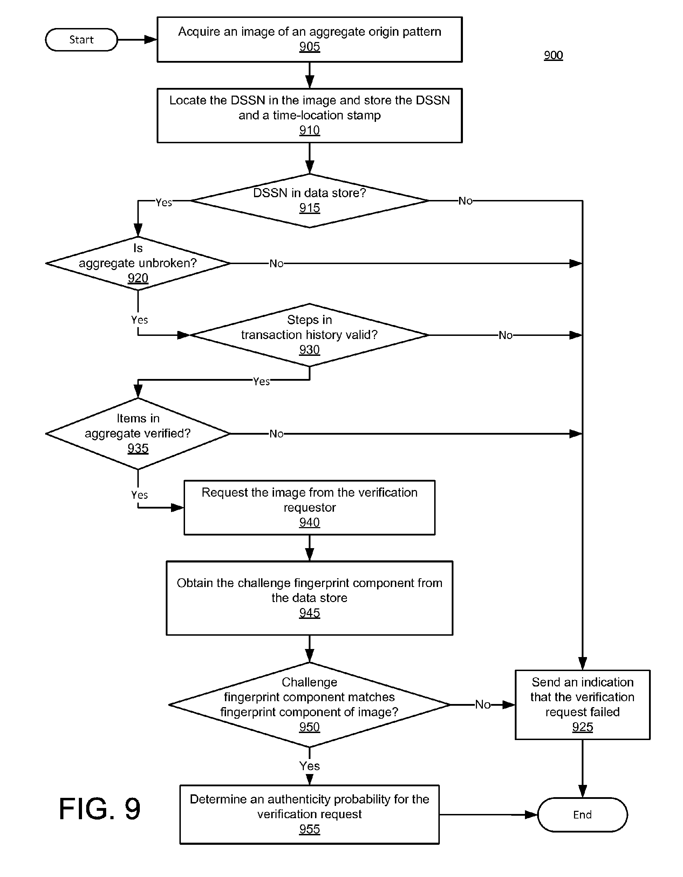

The central authentication server may verify that the list of object or aggregate identifiers are, indeed, valid (810). In some implementations, the central authentication server may use the provided identifiers to look up data in the origin pattern data store. If a matching record does not exist, the object or aggregate identifier is not valid. In addition, if an identifier is found, the central authentication server may determine whether the listed object or aggregate has been flagged as fraudulent. If it has, the object or aggregate identifier is not valid. When the identifier is an aggregate identifier, in some implementations, the central authentication server may perform some or all of the steps of a verification request for the aggregate, as described with regard to FIG. 9 below, to determine if the aggregate identifier is valid. When the identifier is an object identifier, in some implementations, the central authentication server may perform some or all of the steps of an object verification, as described with regard to FIG. 12 below. If any of the identifiers are not valid (810, No), the central authentication server may return an error (815) and the digital identification origin pattern is not generated.

The central authentication server may also optionally verify that the purported owner is the current owner of each of the objects or aggregates identified in the request (820). As discussed above, an object or aggregate may be associated only with one owner at a time (*e.g*., via an FOIS). When one entity passes an object or aggregate to another entity, the second entity becomes the owner of the aggregation. The digital identity origin pattern request may include the FOIS of the purported owner and the central authentication server may verify that the entity identified in the request is also the owner of each requested object or aggregate. If any of the listed items is not currently owned by the purported owner (820, No), the central authentication server may return an error (815) and the digital identification origin pattern is not generated.

If the request has passed the validation checks, the central authentication server may proceed to generate the digital identity origin pattern. For example, the central authentication server may generate a unique identifier for the digital identity origin pattern (825). In some implementations, the central authentication server may generate the identifier by appending the aggregate identifiers from the request into a sequence and then append a pattern token, such as a time nonce or session-unique token, to that sequence. This sequence of DSSNs and the pattern token represents the IRN for the digital identity origin pattern. In another implementation, the central authentication server may generate a unique identifier and append the pattern token to serve as the IRN for the digital identity origin pattern. For a digital identity origin pattern, the IRN may also be referred to as the digital identity identifier.

Because the owner of the object/aggregate included in the digital identity origin pattern has been verified (at step 820), the central authentication server may use the owner's identifiers (e.g., the POID, FOIS) to generate the digital identity origin pattern. Following the same generation procedure described with regard to FIG. 4, the central authentication server may use the POID, IRN, SOIS, and FOIS of the verified owner to generate a FGS and DSSN for the digital identity origin pattern. For digital identity origin patterns, the SOIS may be a constant value, such as "IDENTITY". This allows digital identity origin patterns to be easily identified as such. The DSSN for a digital identity origin pattern may be referred to as the public digital identity identifier. The central authentication server may store the POID, IRN, FOIS, and DSSN for the digital identity origin pattern in a data store (835), so that the data may be used in a verification process, as will be explained below. The data may be stored, for example, in a structure similar to data 505 of FIG. 5, although this example is for illustration only. The central authentication server may then generate a fingerprint component for the digital entity origin pattern (840). The fingerprint component is a cryptographic manipulation, based on the FGS, of computer graphic objects, such as barcodes, 3D surfaces with a texture applied, *etc.*

The central authentication server may return the origin pattern, which includes the serial number and the fingerprint component to the requesting client (845). The digital identity origin pattern may be returned as a 2D image file. The system may then generate constraints for the digital identity origin pattern (850). The constraints may represent a period of time for which the digital identity origin pattern is valid, so that verification requests outside that period are denied. In some implementations, digital identity origin patterns may be automatically deleted from the data store after the time period expires. This may speed up the verification process, as the system will fail to find a valid DSSN in the data store. Process 800 then ends, having generated an origin pattern and the data used to verify the origin pattern at a later date. This process results in a digital identity origin pattern that is of the same general construction as object origin patterns and aggregate origin patterns, and is therefore recognizable to the same mobile client scanners and CDPU for verification.

### Verification of Aggregate Origin Patterns

FIG. 9 illustrates a flow diagram of a verification process 900 for an aggregate origin pattern, in accordance with some implementations. The process 900 may be performed by an authentication system, such as system 100 of FIG. 1. An individual, *e.g.,* an inspector, may open a product verification application, such as application 182 of FIG. 1, and acquire an image of the origin pattern, from example from product packaging (905). The product verification application may also be referred to as a client. Examples of the client include smartphone or tablet apps as well as a computer in communication with a scanner or other imaging device that is configured to capture an image of the aggregate origin pattern. The client may thus be any verification requestor that is in communication with the central authentication server. The product verification application may analyze the image to locate the serial number (e.g., DSSN) component of the origin pattern, undistort the origin pattern (including both the surface-texture component and the DSSN as both parts will be scanned optically), and store the DSSN (910). In some implementations, the product verification application may also store a time-location stamp for the image. The product verification application may send a verification request to the central authentication server. In some implementations, the verification application may send the DSSN and time-location stamp to the server. In some implementations, the verification application may send the DSSN and, optionally, the time-location stamp, and the central authentication server may request the image of the fingerprint portion at a later time. In some implementations, the image of the fingerprint portion may be sent with the initial request. In some implementations, the product verification application may forward the acquired image to the central authentication server, and the central authentication server may analyze the image as described above, locating the DSSN. Accordingly, step 910 may include sending the acquired image to the central authentication server and the central authentication server may perform step 910 on the acquired image. Thus, an acquired image is another example of a verification request. The verification request can also include a requestor identifier that corresponds to the client that sent the verification request.

The central authentication server may determine whether the DSSN exists in a data store (915), for example origin pattern data 12 of FIG. 1. In other words, the DSSN from the packaging must exist in a data store on the central authentication server. In some implementations, this may be determined by a single database query. In some implementations, this may include parsing the various elements of the DSSN, for example into the FOIS, SOIS, and PIS components. If a DSSN is located (915, Yes), it confirms at least that the aggregate exists. This is a first test that an aggregate must pass to be authenticated. If the DSSN is not found (915, No), the central authentication server may send a message back to the product verification application indicating that the verification request for the aggregate failed (925) or, in other words, the object did not pass the authentication test. Process 900 then ends for this verification request.

If a DSSN is found (915, Yes) *(e.g.,* the serial number component of the origin pattern is present), the central authentication server may perform additional verification tests. In some implementations, a first test may determine whether the aggregate origin pattern is 'broken' at the time of its verification request (920), meaning that the origin patterns for items included in the list have not yet been distributed or re-aggregated. An aggregate origin pattern can only be useful during the window of time where its components are grouped together. The system may consider the aggregate broken when it detects diverging locations of item-level verification requests. Such information may be stored in the data store, for example in data 210 of FIG. 2 or verification data 510 of FIG. 5. Thus, the system may look for any verifications of component items that occurred after generation of the aggregate. If such requests are found at diverging locations, the system may consider the aggregate broken. If verification requests for the aggregate origin pattern itself violate any constraints or are found at diverging locations, the system may consider the aggregate broken and all its component items invalid, and may attempt to determine which request is legitimate. In addition, an aggregate may be explicitly broken. In some implementations, explicitly breaking an aggregate may include flagging the aggregate as broken. If the aggregate being verified includes other aggregates as components, and one of the other aggregates is broken, the system may consider the current aggregate broken as well. Once the system recognizes that an aggregate has been broken (920, No), the system will no longer accept verification requests for that aggregate's origin pattern and may provide a message back to the product verification application indicating that the verification request for the aggregate failed (925), *e.g.,* the object did not pass the authentication test. In some implementations, the system may flag the aggregate as broken. Process 900 then ends for this verification request.

If the aggregate is unbroken (920, Yes), the system may verify the steps in the aggregate's transaction history (920). The system may perform this test when the aggregate has been transacted (*e.g.,* sold, licensed, rented, *etc.,* one or more times since its generation. Upon receiving a verification request from a client, the central authentication server may look for transaction history records that relate to the serial number (e.g., DSSN) of the aggregate. Each transaction in the aggregate origin pattern's history is checked for validity (*i.e.,* that the transaction is occurring between two authorized parties), and if any step does not pass, the aggregate is marked as a diverted good. In other words, the transaction history is not valid (930, No). In addition to sending a message back to the product verification application indicating that the verification request for the aggregate failed (925), the system may also take other steps, such as notifying the previous owner in the chain of custody of the diversion and marking the item-level object origin patterns as diverted goods. In some implementations, the previous owner may be identified using a verification owner for the aggregate origin pattern, as discussed above with regard to FIG. 5.

If the transaction history is valid (930, Yes), the system may verify the inclusion of the aggregate items into the aggregate (935). This test verifies that the aggregation of the items is valid in the first place. To test this, the system may verify that the aggregate complies with the constraints of each item included in the aggregate, for example, constraints defined as described above with regard to steps and 340 of FIG. 3 and 620 of FIG. 6. If the system finds a violation in the aggregate (935, No), the system may send a message back to the product verification application indicating that the verification request for the aggregate failed (925), *i.e.,* the object did not pass the authentication test. Process 900 then ends for this verification request.

When there are no violated aggregate class restrictions (935, Yes), the system may request an image of the fingerprint component (940) from the verification requestor (e.g., the client), if this was not already obtained as part of a previous step. Because data transfer of an image is more time consuming and costly than transfer of short character sequences, in some implementations, this request can be delayed until the verification tests have been passed. The system may obtain the fingerprint component for the origin pattern from the data store (945). For example, when the origin pattern was generated, the system may store a copy of the fingerprint component in the data store *(e.g.,* as a bitmap image). Of course, in some implementations, the system may generate a new fingerprint component using information in the data store (*e.g.,* the IRN, SOIS, FOIS, *etc.* Regenerating the fingerprint component via cryptographic hash operations may be optional as the system can store a bitmap image of the corresponding fingerprint component *(i.e.,* an image generated at the time the aggregate originpattern was originally created). This may improve the response time of a verification request, especially when an aggregate becomes large *(e.g.,* the IRN becomes long due to the number of item DSSNs appended together). Storing and retrieving a bitmap of the corresponding fingerprint component in the data store may be less time-consuming and data-intensive than performing the cryptographic hash operations on the IRN, described above with regard to FIG. 4.

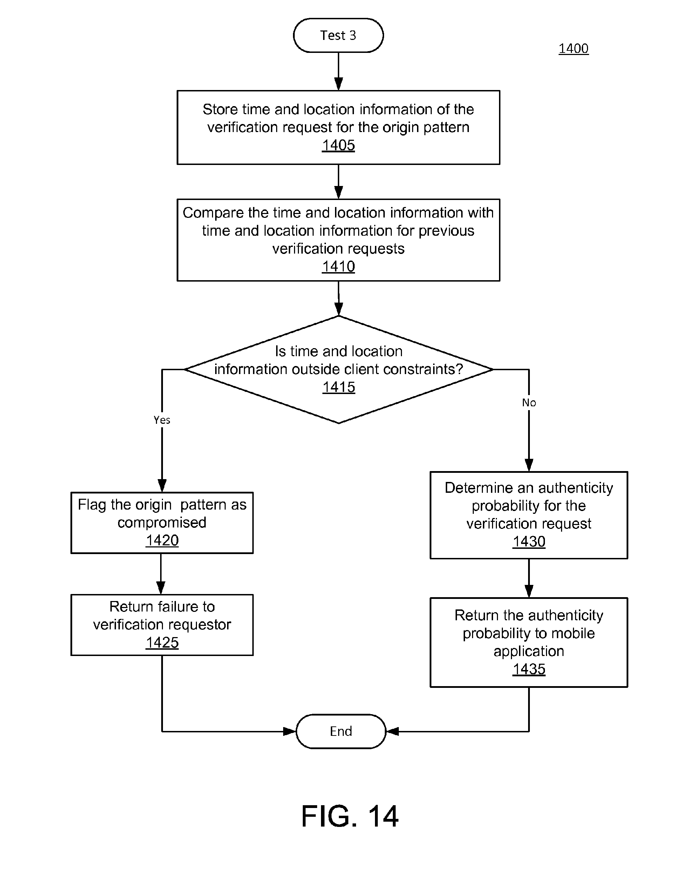

If the retrieved DSSN and fingerprint component match those that arrived with the verification request (950, Yes), the aggregate origin pattern can be considered authentic. In some implementations, the system may determine an authenticity probability for the verification request 955). Determining an authenticity probability may be performed as described with regard to FIGS. 14 and 15. In some implementations, verification request data is stored along with the authenticity probability in the event that owners or inspectors of the origin pattern wish to view its verification history. The authentication probability may be provided to the requestor as an indication of the authenticity of the aggregate origin pattern. Process 900 then ends for this particular verification request.

It is understood that only the entities who have explicitly registered with the central authentication server may generate object origin patterns or aggregate origin patterns. In some implementations, the entity will have presumably provided some amount of real world identification and/or certification as part of the registration process. This material will be considered confidential between each entity and the provider of the central authentication server. Thus, through the registration process the provider of the central authentication server ensures most entities who may wish to interact with each other through use of the central authentication server are not dealing with impostors, and also provides entities with tools to validate the identities of their intended partners.

### Verification of Digital Identity Origin Patterns

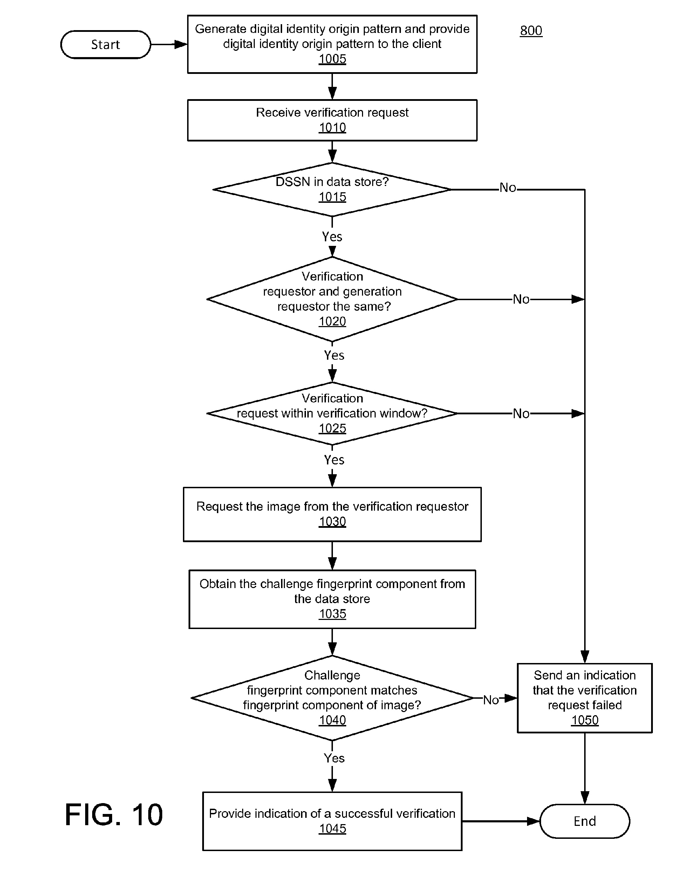

FIG. 10 illustrates a flow diagram of a verification process 1000 for a digital identity origin pattern, in accordance with some implementations. The process 1000 may be performed by an authentication system, such as system 100 of FIG. 1. Digital identity origin patterns enable entities to prove their validity as the legitimate owners of products. In some implementations, an entity may include a digital identity verification (e.g., "Verify Me") control. The control may be a button, link, or some similar feature requiring manual activation. The digital identity verification control may be displayed on an online marketplace page that includes items (either aggregates or individual objects) for sale by the entity. An online marketplace page may be any website or application (including mobile applications) used by two parties to sell, rent, lease, or otherwise transfer ownership of an item. An inspector using a client may click the control and initiate the generation process by sending a generation request to the central authentication server. Following the generation process described with regard to FIG. 8 above, the central authentication server uses the time of the inspector's initiation event or another one-time/session-based token as the pattern token to create a unique digital identity origin pattern to that event (1005). The origin pattern is then returned to the client and displayed via a screen to the inspector.

The inspector may then send a verification request to the central authentication server, e.g., using a product verification app on the client (1010). Since the client may be a smartphone (and not, for example, a desktop computer or tablet), the inspector may not be able to conveniently take a picture of the origin pattern displayed on the screen with a separate device, which is the standard procedure for an object or aggregate origin pattern. Therefore, the digital identity verification control and/or the product verification app may also include a 'screenshot' function that can provide a captured image of the digital identity origin pattern that is displayed on the screen.

Regardless of the scanning method (e.g., screen capture, scanner, or camera), the central authentication server may determine whether the identifier for the digital identity origin pattern from the request exists in the data store (1015). If the DSSN obtained from the digital identity origin pattern in the request does not exist in the data store (1015, No), the request is invalid and the central authentication server may return an error (1050) indicating the verification failed. If the identifier for the digital identity origin pattern does exist (1015, Yes,) the central authentication server may verify that the verification requestor and the generation requestor are the same (1020). It is intended that the user who requested generation of the digital identity origin pattern is the same as the user who submitted the verification request to the central authentication server. The verification request is typically sent shortly after seeing the origin pattern because the digital identity origin pattern is sometimes only valid for a short window, or in other words, a short period of time. Because it cannot be assumed that the person making the verification request and the person who requested the creation of the digital identity origin pattern are the same person, the central authentication server may verify that they are the same (1020). In the event of a spoofing attack, the verification requestor may be an unwitting user visiting an attacker's account, and the attacker may request the digital identity origin pattern (although this attack will be difficult to succeed, due to the origin pattern's time-dependency). Therefore, the central authentication server may check that the verification inspector and origin pattern requestor are the same entity. In some implementations, this verification may include checking the client IP address of the generation request against the client IP address of the verification request. Other tools may be used to accomplish the same objective, such as location stamping requests and limiting inspections to devices within a sufficiently small radius for that particular origin pattern. If the requestors are not the same (1020, No), the central authentication server may return an error (1050) indicating the origin pattern was not verified and process 1000 ends.

If the requestors are the same (1015, Yes), the central authentication server may determine whether the verification request is within a verification window (1025). To determine whether the verification request is within the window, the central authentication server may use the pattern token for the DSSN, e.g., located at the end of the IRN. If the pattern token is a time-based token, the central authentication server may calculate a time elapsed since the verification request initiation to determine whether the time elapsed falls within the window. As another example, when the token is session-based, the central authentication server may determine whether the session-unique token is valid. For example, the verification request may include a session identifier that should match the token, or the token may be used to determine if the session is still valid on the client. If the session is not valid, the request is outside the verification window. In some implementations, if the time elapsed is greater than a threshold, the request is outside the verification window. The threshold may be set at an amount of time sufficient to allow the requestor/inspector to activate the verification app and scan the digital identity origin pattern but one that also is short enough to prevent pirating of this origin pattern. If the digital identity origin pattern automatically regenerates at the passing of each time threshold, a five second threshold may be used. The time threshold may be selected based on the speed of computer hardware and networks used in the system. If the request is outside the verification window (1025, No), the central authentication server may return an error (1050) indicating the origin pattern was not verified and process 1000 ends.

If the request does not violate the previously stated constraints (1025, Yes), the central authentication server may request an image of the fingerprint component (1030) from the verification requestor (e.g., the client), if this was not already obtained as part of a previous step. As indicated earlier, this may improve processing time in some implementations, but it is understood the image may be provided with the verification request itself The system may generate a fingerprint component using the information in the data store *(e.g.,* the IRN, SOIS, FOIS, *etc*.) (1035). Of course, in some components, the system may store an image of the fingerprint component and regeneration may include retrieving the stored image. If the retrieved DSSN and fingerprint component match those that arrived with the verification request (1040, Yes) the digital identity origin pattern can be considered authentic and the central authentication server may provide an indication to the requestor of the success (1045). The purchasing entity may then continue in the online transaction process and eventually verify the object or aggregate origin patterns upon their physical arrival, should the purchaser choose to do so.

The details of the security scheme described throughout, while sharing some characteristics with general Internet security communication protocols, do not imply that insecure communication between the central authentication server and mobile clients is acceptable. These details also do not guarantee secure communication between said parties; therefore, some implementations may include implementing secure communication procedures around the core technology outlined here.

It is understood that when coupled with the concepts of an aggregate origin pattern and a digital identity origin pattern, an object protected by an object origin pattern can move from its point-of-creation, through a complex supply network, and to its point-of-sale with a high degree of efficiency and confidence of authenticity. Since the basis for authentication in this security scheme is line-of-sight scanning, aggregate and digital identity origin patterns deliver scanning capability to the inspector when the item-level origin patterns themselves cannot be scanned, due either to physical absence or to time and volume constraints. For example, if an inspector is not physically present, a digital identity origin pattern is used. If the inspector is physically present but cannot, either due to time constraints or packaging constraints, inspect individual objects, an aggregate origin pattern may be used.

Regardless of what type of origin pattern is ultimately 'wrapping' an object origin pattern, any event, information, or statement adjustment to the wrapping origin pattern can be automatically be recorded in each object origin pattern contained within. In other words, in some implementations, objects can inherent all verification events for any aggregate or digital identity origin pattern the object is or was included in. This ensures supply chain regulation compliance and protection against many diversion, replay, spoofing, or counterfeiting attacks. For example, an unauthorized owner of an aggregate origin pattern such as a box of medical products would be able to simply remove the medical products, discard the box, and sell the medical products if their object origin patterns did not reflect that an attack had occurred.

Given that the digital identity origin pattern is deterministically dependent on the aggregates (and therefore the objects) of which it is composed, it is possible for an owner to display many different digital identity origin patterns tied to different aggregates. This does not present a risk of deception to consumers or to other partners in a supply chain, as this is ultimately a method for authenticating objects at a distance. The legal and business legitimacies an entity must posses *a priori* to generating any digital entity origin patterns may be demonstrated not only by its supply chain partners' consents but also by legal identification and certification submitted to the security scheme operator. This submission of 'real-world' documents can be particularly important for players in highly regulated industries, such as pharmaceuticals.

Because anti-counterfeiting and supply chain management can no longer remain distinct from each other at a cost-efficient scale, the added complexities and challenges of introducing logistics integration and control into an anti-counterfeiting solution, while surely difficult to implement and maintain, will generate far more value to manufacturers, supply chain partners, distributors, and consumers than what is currently available.

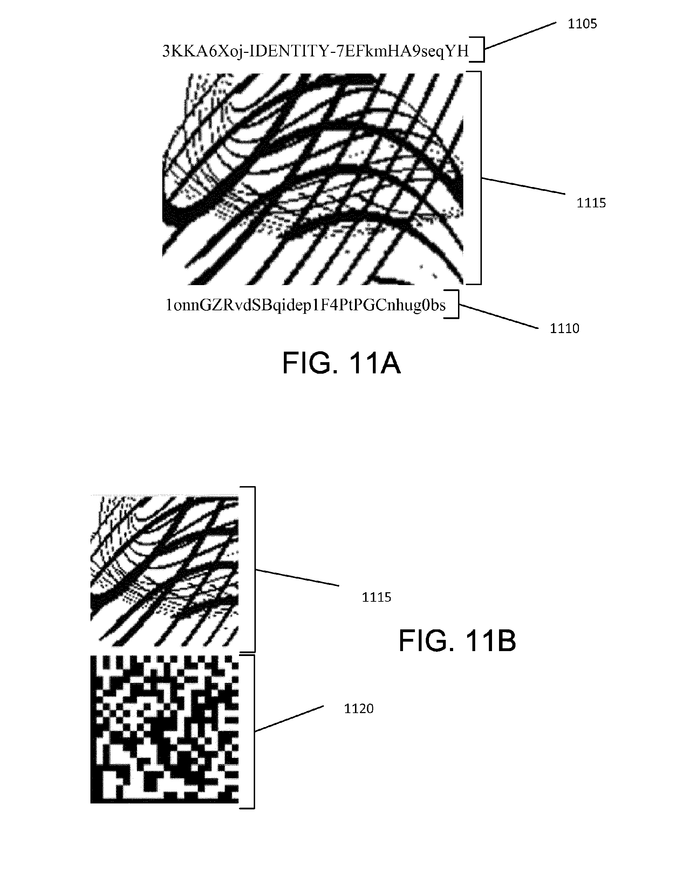

FIGS. 11A and 11B illustrates two example 2D origin patterns, which may be affixed to an object, object packaging, or displayed on a computer screen in accordance with various implementations. In the example of FIG. 11A, the serial number's physical layout may be horizontally listing some characters of the serial number above the fingerprint component and remaining characters below. In the examples of FIG. 11, the serial number (e.g., the DSSN) includes 8 characters + 8 characters + 44 characters + 2 separation hyphens = 62 characters = 2 rows × 31 characters per row. Items 1105 and 1110 represent the serial number (or DSSN), split into two 31-character strings. In the example of FIG. 11B, the serial number component is a 2D barcode, represented by item 1120. In the examples of FIGS. 11A and 11B, the fingerprint component of the origin pattern is represented by item 1115. As indicated above, the fingerprint component 1115 of FIG. 11 may be implemented as a 3D surface-texture pattern, a 2D surface-texture pattern, or some other computer generated image manipulated by the FGS generated as part of generating the DSSN of the origin pattern.

### Object Origin Pattern Verification

FIG. 12 illustrates a flow diagram of a verification process 1200 for an object origin pattern, in accordance with some implementations. The process 1200 may be performed by an authentication system, such as system 100 of FIG. 1. An individual, *i.e.,* an inspector, may open a product verification application, such as application 182 of FIG. 1, and acquire an image of the origin pattern on an object (1205). The product verification application may also be referred to as a client. Examples of the client include smartphone apps. The client is a verification requestor that is in communication with the central authentication server. The product verification application may analyze the image to locate the serial number (e.g., DSSN) component of the origin pattern, undistort the origin pattern (including both the surface-texture component and the DSSN as both parts will be scanned optically), and store the DSSN (1210). In some implementations, the product verification application may also store a time-location stamp for the image. The product verification application may send the DSSN and time-location stamp to a central authentication server (1215). The DSSN and the time-location stamp are one example of a verification request. In some implementations, the product verification application may forward the acquired image to the central authentication server, and the central authentication server may analyze the image as described above, locating the DSSN. Accordingly, step 1215 may include sending the acquired image to the central authentication server and the central authentication server may perform step 1210 on the acquired image. Thus, an acquired image is another example of a verification request. The verification request can also include a requestor identifier that corresponds to the mobile client that sent the verification request.

The central authentication server may determine whether the DSSN exists in a data store (1220), for example origin pattern data 12 of FIG. 1. In other words, the DSSN imprinted on the host object must exist in a data store on the central authentication server. In some implementations, this may be determined by a single database query. In some implementations, this may include parsing the various elements of the DSSN, for example into the FOIS, SOIS, and PIS components. If a DSSN is located (1220, Yes), it confirms at least that the final link in the product's chain of ownership exists. This is a first test that an object must pass to be authenticated. If the DSSN is not found (1220, No), the central authentication server may send a message back to the product verification application indicating that the verification request for the object failed (1225), *e.g.,* the object did not pass the authentication test. Process 1200 then ends for this verification request.

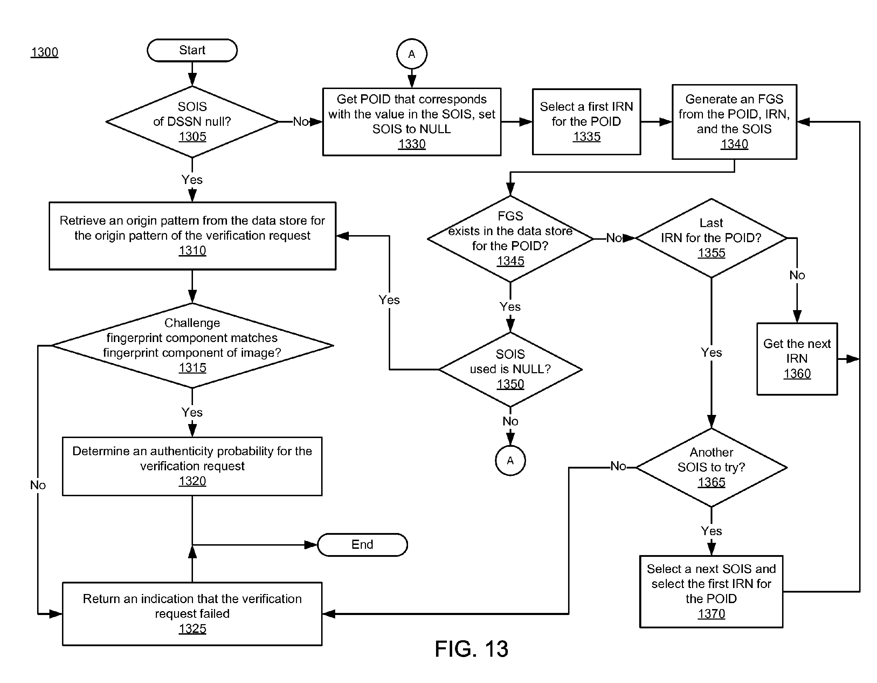

If a DSSN is found (1220, Yes) *(e.g.,* the serial number component of the origin pattern is present), the central authentication server can be reasonably sure that the verification request is not spam to slow down the system's processing capabilities, and the central authentication server may request the image of the origin pattern from the verification requestor (e.g., the client) (1230). Because data transfer of an image is more time consuming and costly than transfer of short character sequences, in some implementations, this request can be delayed until the first verification test has been passed, as illustrated in FIG. 12. The mobile client may then return the image of the object origin pattern to the central authentication server, if it was not transmitted prior to passing the first test. Of course, in some implementations the surface-texture component may be provided with the DSSN, or the acquired image may be provided to the central authentication server as part of the verification request and the central authentication server may obtain the surface-texture component from the image. When the central authentication server receives the surface-texture component, the central authentication server may verify the surface-texture component and determine an authenticity probability for the verification request (1235). Verifying the surface-texture component includes verifying the chain of ownership, as described in more detail below with regard to FIG. 13. Even if the origin pattern is verified, the authenticity probability can be used to identify unauthorized copies that have a duplicate of a valid origin pattern, as described in more detail with regard to FIG. 14. Verification failure or authenticity probability information may be returned to the verification requestor (e.g., the mobile application) as part of verifying the original pattern and determining the authenticity probability. Process 1200 then ends for this particular verification request.

FIG. 13 illustrates a flow diagram of an example surface-texture component verification process 1300, in accordance with disclosed implementations. Process 1300 may be performed in response to a verification request passing the first test, *i.e.,* step 1220 of FIG 12. In other words, process 1300 may be performed as part of step 1235 of FIG. 12 and process 1300 assumes the serial number component (e.g, the DSSN) has been verified and is present in the data store. In some implementations, process 1300 may be performed by an origin pattern verification module, such as origin pattern verification module 134 of FIG. 1, of the central authentication server.

To begin process 1300, the central authentication server may determine whether or not the chain of ownership identifier, *e.g.,* the second element of the DSSN or SOIS, is null ("0000000") (1305). If the SOIS element is null there is no previous link in this product's chain of ownership and the DSSN is for an original manufacturer. If the SOIS element is non-null, the object was manufactured in a chain of ownership, and the central authentication server may run through the entire chain of ownership and verify that a valid serial number component exists for each link. As the central authentication server follows the chain backwards and reaches an SOIS that is null, the central authentication server can be thought to have arrived at the first link in the chain, and the chain has been verified.

If the SOIS is null (1305, Yes) or if the chain of ownership has been verified (1350, Yes), the central authentication server may retrieve a fingerprint component from the data store for the origin pattern identified in the verification request (1310). In other words, the central authentication server may store a copy of the fingerprint component provided in response to the generation request. In some implementations, the central authentication server may re-generate a fingerprint component using the information from the DSSN obtained from the image on the object and corresponding information from the data store. For example, each FOIS has a corresponding POID, and the data store has the object identifier (i.e., IRN) that correspond with the DSSN. Using the FOIS, SOIS, POID, and IRN, the central authentication server can generate the challenge surface-texture component as described with regard to FIG. 6. Once the challenge fingerprint component has been retrieved (or generated) and, optionally, trimmed, and spliced with a distortion detection pattern, the central authentication server may compare the challenge fingerprint component to the surface-texture component of the origin pattern from the image (1315) that was submitted for verification. This test can only be passed if there is a high confidence in a match between the pictures. In some implementations, the confidence may be 98% or more. In some implementations, the confidence percentage may be adjusted by the original owner via the generation client *(e.g.,* client 160 of FIG 1). This cryptographic/differential geometry approach provides the bulk of the robustness of the authentication process. If there is a match (1315, Yes), the central authentication server may determine an authenticity probability for the verification request (1320). Determining an authenticity probability may be performed as described with regard to FIGS. 14 and 15. Process 1300 may end, with a response to the verification request being provided as part of determining the authenticity probability. In some implementations, the central authentication server may skip step 1320 and may return an indication that the verification request is successful. However, determining the authenticity probability provides an extra layer of security for identifying counterfeit objects.

If the challenge fingerprint component does not match (1315, No), the central authentication server may return an indication that the verification request failed (1325). In some implementations, the indication may be an error message or other information that conveys an unsuccessful test to the verification requestor. Process 1300 then ends.

If the SOIS is not null (1305, No), the origin pattern includes a chain of ownership and the central authentication server may traverse the chain backwards, verifying each link. If the central authentication server is unable to verify a link, the verification test fails. The FGS for any origin pattern instance is generated by hashing the POID of the owner appended with the IRN (also for the owner) and the SOIS, which represents either a null sequence, if it is the first link, or the FOIS of the previous owner. To move backwards in the chain, the central authentication server may get the POID that corresponds to the SOIS *(e.g.,* the non-null value from step 1305) of the origin pattern (1330). The central authentication server may also set the SOIS to null, which allows the central authentication server to assume that this current link in the chain of ownership is the first link. If it is not the first link, the central authentication server may cycle through valid FOIS values, as will be explained herein. The central authentication server may then select a first IRN for the POID (1335). As previously discussed, each owner (and thus, each POID) has a range of valid IRNs. The central authentication server may cycle through the IRNs. In other words, the central authentication server may search the data store for entries with the desired FOIS+SOIS+PIS combination by incrementing through all IRNs belonging to the current owner. At each step, the POID+IRN+SOIS string is rehashed, and if the resultant hash digest matches any of the FGSs belonging to an object origin pattern object, the link is verified. If that link also has a non-null SOIS, the central authentication server may continue to move backwards.

Accordingly, the central authentication server may generate an FGS by applying the hash function to the appended POID+IRN+SOIS string, as described with regard to FIG. 4 (1340). The central authentication server may determine whether this generated FGS exists in the data store in an entry associated with the POID, or the current owner (1345). For example, if the FGS exists in data 205 with an FOIS that corresponds to the POID (because the FOIS is the public identifier for the owner where the POID is the private identifier), the central authentication server has verified the current link.

If the link is not verified (1345, No), the central authentication server may continue to cycle through the valid IRNs for the POID. Thus, the central authentication server may determine if the IRN just used was the last valid IRN for the POID (1355). If it is not, the central authentication server gets the next IRN (1360), and generates a new FGS using the new IRN (1340). If the IRN is the last valid IRN for the POID (1355, Yes), the central authentication server may cycle through valid values for the SOIS. Thus, the central authentication server may determine whether there are other SOIS values to try (1365). If there are (1365, Yes), the central authentication server may select a next SOIS, select the first IRN for the POID (1370), and try again to generate a valid FGS for the POID+IRN+SOIS combination (1340). If there are no other SOIS values to try (1365, No), the chain of ownership is not valid, and the verification request fails. Accordingly, the central authentication server may return an indication that the verification request failed (1325), and process 1300 ends for the verification request.

If the link is verified (1345, Yes), the central authentication server may determine whether the SOIS used to generate the FGS is NULL (1350). If it is NULL (1350, Yes), the first link has been reached and the entire chain of ownership has been verified. Accordingly, the central authentication server may verify the surface-texture component, as described above with regard to steps 1310 through 1325. If the SOIS is not NULL (1350, No), the SOIS represents the FOIS of another owner, and the central authentication server may continue to move backwards in the chain to verify the previous link. Accordingly, the central authentication server may repeat the process of getting the POID for the other owner (*e.g.,* the POID that corresponds with the SOIS, and cycle through the IRN+SOIS combinations to determine if a valid FGS exists, e.g., starting again at 1330 with the new POID, until the original link in the chain of ownership is located or the chain of ownership fails the validation test.

FIG. 14 is a flow diagram of an example process 1400 for using time and location during verification of the origin of a product, in accordance with disclosed implementations. The time and location verification may be a third test applied to a verification request by the central authentication server. In some implementations, process 1400 may be performed by an origin pattern verification module, such as origin pattern verification module 134 of FIG. 1, of the central authentication server. The process 1400 may be performed when the central authentication server decides the object origin pattern just generated matches the object origin pattern image on the object, *e.g.,* as part of step 1320 of FIG. 13. In the process 1400, the central authentication server stores time and location information for the verification request (1405). In some implementations, the central authentication server may store the time and location information in a table entry, such as Time-Location Stamp Table 210 of FIG. 2, for the matched object origin pattern. The central authentication server may compare the time-location information to time-location information for previous verification requests (1410). The previous verification requests may be existing entries in the TLST for the object origin pattern. The comparison of time-location information for an object origin pattern may enable the central authentication server to evaluate the likelihood of an attacker copying an existing object origin pattern and attaching it to a counterfeited object.

The central authentication server may optionally allow a registered generation client to impose constraints, either strict or probability-driven, on the time-location entries of object origin pattern generated for the registered client. For example, the generation client may allow the owner to set windows on valid time information. Such windows may be dictated by the owner's logistical processes (e.g., different stages of product fabrication and assembly, time-frames in which sourced parts might arrive at a factory, *etc.*) and verification requests made outside the window are considered compromised. As another example, an air freight shipping container may appear in many locations around the world in a short time period while a spare auto part may be licensed only for use in the United States. Accordingly, the spare auto part manufacturer may have a constraint that limits valid location information to the United States, while the air freight shipper may have a constraint that limits valid location information to the shipping route. Accordingly, the central authentication server may determine whether the time-location information conforms with the manufacturer's constraints for the object origin pattern (1415). Such constraints may be provided per object origin pattern instance when it is generated, although in large batch generation runs, extra functionality can be added to allow for an owner to impose identical constraints on many object origin patterns simultaneously upon their creation.

If the time-location information fails to conform with the constraints (1415, Yes), the central authentication server may flag the object origin pattern as compromised (1420). For example, if the location entries in the time-location data for an object origin pattern start including attempted verifications from Asia Pacific when the constraint indicates US locations are valid or when the central authentication server starts receiving attempted verifications from South America and Eastern Europe within a short time-period (*e.g*., a matter of hours when the constraints specify a matter of days) for an object origin pattern, the central authentication server may flag this object origin pattern as potentially compromised. In some implementations, this may occur by marking those verification requests as unconfirmed using the verification tag and/or by calculating and displaying the unconfirmed authenticity probability. In some implementations flagging the object origin pattern as compromised may be indicated by decreasing a confidence that the match is authentic to level that would indicate inauthenticity, e.g., penalizing the authenticity probability. The central authentication server also returns a failure response to the verification requestor (1425), which is an indication to the requestor that the item is not, or may not be, authentic. Process 1400 then ends for this particular verification request.

If the time-location information does conform to the constraints (1415, No), the central authentication server may determine an authenticity probability for the verification request (1430). The authenticity probability may be assigned based on a probabilistic authentication process. The authenticity probability may be an indication of the likelihood that the verification request is for an authentic article. In other words, the central authentication server may attempt to determine which of the host objects optically scanned for the various verification requests represent original objects as opposed to counterfeit objects by weighing the validities of all the requests against each other. Under these circumstances, a winning host object may be determined by its relative location proximity to the last confirmed verification request in comparison to objects represented by the other losing requests. Due to the flexibility of the range of constraints an owner may choose to apply, this relative 'secure' location proximity may be determined by a request's velocity and may even shrink with time if a pattern in time-location data arises. If a clear winner emerges, *e.g.,* as indicated by a pattern in time-location data, the central authentication server may assign an authenticity probability that is high compared to the authenticity probability of "false" verification requests. The central authentication server may reference the winner as the preferred object origin pattern from then on, and verification requests that differ from the time-location data pattern may be marked as likely fraudulent (e.g., assigning a very low authenticity probability). Thus, implementations provide degrees of probability that are increasingly difficult to cheat as more verification attempts are added to an object origin pattern's time-location information (*e.g*., represented in the TLST). The more entries existing in a object origin pattern's time-location information that fit into a recognizable pattern, the quicker and more effectively the central authentication server will be able to sort out potential conflicts as part of process 1400. The central authentication server may return the authenticity probability to the verification requestor, *e.g*., via the mobile application (1435). The probability provides an indication to the verification requestor about whether the object scanned is authentic or not. In some implementations, if the probability fails to meet a threshold the central authentication server may optionally provide a message indicating the object has a high probability of being counterfeit. In some implementations, the central authentication server provides the probability and allows the requestor to make conclusions about the authenticity of the object. In some implementations, the central authentication server may provide additional information to the verification requestor, such as the number of previous verification requests, a message, *etc.* Process 1400 then ends for this particular verification request.

FIG. 15 is a flow diagram of an example process 1500 for determining the likelihood of authenticity of a product with an affixed origin pattern, in accordance with disclosed implementations. Process 1500 is one example of a probabilistic authentication process that may be performed as part of step 1430 of FIG. 14. A central authentication server may perform process 1500 to examine the time and location of a verification request within the context of any constraints or patterns that may already exist for a particular object origin pattern. In some implementations, the process 1500 may use time-location information from a particular verification request for a object origin pattern as well as constraints, such as a minimum wait time and a velocity threshold. The time-location information may be an entry in a TLST table for verification request *n* (*e.g.,* timeArray[n], locArray[][n][], and locArray[][][n] of FIG. 2). The minimum wait time prevents spamming of the central authentication server and the time-location information *(e.g.,* the TLST).

Process 1500 may begin with the central authentication server comparing the time that has passed since the last verification request to a minimum wait time (1505). The minimum wait time may be a minimum time that must pass between verification requests, which may be specific to the owner, the object (product), or a system-wide variable. In some implementations, the minimum wait time may be passed to process 1500 as a parameter. If the minimum time has not been reached (1505, No), the central authentication server may provide a response to the verification request that prompts the requestor to try again later (1510). Process 1500 then ends for this verification request without providing an indication of whether the object is authentic.

If the minimum wait time has been reached (1505, Yes), the central authentication server may determine whether the verification requestor is the verification owner of the object origin pattern (1515). As discussed above, the verification owner of the object origin pattern is the consumer-side owner of that object origin pattern - embedded product. In some implementations, the owner may be identified as part of the object origin pattern information in data 205. The verification owner may be identified by comparing the verification owner identifier in the data store with a requestor identifier provided as part of the verification request. If the verification requestor is the verification owner (1515, Yes), the central authentication server may reset the authenticity probability to 1.00 (1550) and return the authenticity probability to the requestor, e.g., via the mobile application. Thus, the central authentication server does not perform probabilistic authentication when a verification owner makes a verification request. Instead, the central authentication server bypasses the final verification test and adds a new entry to the object origin pattern object's TLST with an authenticity probability that represents an authentic object.

Bypassing probabilistic authentication may be especially useful in some high-velocity cases, such as where a object origin pattern -embedded object is a highly portable, consumer-side product. Without bypassing probabilistic authentication the central authentication server may unfairly penalize a product owner *(e.g.,* the legal purchaser of the product) for the ease with which the product moves through commerce, making it harder for the owner to sell the product. To avoid such unfair penalties, each user of the mobile verification application may choose to be identified by a random 64-character sequence, which may be then stored as the verification owner value for the product, for example using the data 205. The verification owner becomes the last link in the chain of ownership, although this consumer-side link carries only verification privileges and not intellectual property ownership. If an incoming verification request includes a requestor identifier that matches the object origin pattern's current verification owner identifier, the central authentication server bypasses the probabilistic authentication and the object origin pattern's object data are updated (*e.g*., confirmed time-location entry, authenticity probability, verification requestor identification if necessary, and verification tag if non-null), and the authenticity probability is reset to 1.00. The assignment of an inspector's identifier as the object origin pattern's verification owner identifier can be made only with the consent of either the previous verification owner or the original owner *(e.g.,* the manufacturer identified by the FOIS of the object origin pattern). This may occur during a transaction involving the sale or purchase of that object origin pattern's host product. To simplify the user experience, this process may be hidden as much as possible from the transaction and verification processes.

If the verification owner is not the requestor (1515, No), the central authentication server may determine whether the maximum velocity has been reached for the object origin pattern (1525). The velocity threshold represents the greatest distance per unit of time that an object origin pattern -affixed object or product can travel between consecutive verification requests. The velocity threshold may thus be object origin pattern specific, owner specific, or object specific. In some implementations, the velocity threshold may be provided to process 1500 as a parameter. The central authentication server may calculate the distance per unit of time for the current verification request based on the time-location information in the current request and the time-location information in a verification request that occurred just prior to the current request. If no prior verification requests exist, then the velocity threshold is not met.

If the velocity threshold has been reached (1525, Yes), the central authentication server may set the authenticity probability (*e.g*., authProb[n] of the TLST 210 entry *n* for the object origin pattern) for this request to a value that represents a severe penalty on the authenticity (1530). For example, the central authentication server may take the authenticity probability of a previous confirmed verification request or *(e.g., n-1*) and divide the previous authenticity probability by a severe penalty factor, such as 100 or 1000 (of course, the severe penalty factor could be .01 or .001 and the central authentication server could multiply the previous authenticity probability by the penalty factor). In other words, the central authentication server may set the authenticity probability of the current verification request to a value significantly lower than the authenticity probability of the previous confirmed request. Accordingly, as more requests reach the velocity threshold, the less likely it is that the central authentication server provides an authenticity probability that represents an authentic product. Using the prior confirmed request, the central authentication server may prevent verification damage from impacting an authentic object when a counterfeit object shows up far outside of its intended geographic region. The central authentication server may also indicate that the verification request is unconfirmed (1545), for example using a verification tag. The central authentication server may then store the data for the verification request, *e.g*., the velocity, the authenticity probability, *etc.,* and return the authenticity probability and any other relevant data or messages (1560). Process 1500 is then complete for this verification request.

If the velocity threshold has not been reached (1525, No), the central authentication server may determine whether a security ratio threshold is reached (1535). In other words, even if the velocity threshold is not met, it still may come undesirably close. The security ratio threshold is a value that the owner sets, and may be for a particular class of product, for a particular object origin pattern, or for the owner. The security ratio threshold may be met by one of two security ratios. A request security ratio represents a ratio of a verification request's velocity to the velocity threshold, e.g., from step 1525. An average security ratio represents a ratio of the average of the velocities over all previous consecutive unconfirmed verification requests with respect to the velocity threshold. Using the average security ratio assists in tracking the movements of a object origin pattern. Thus, if either the request security ratio or the average security ratio exceeds the security ratio threshold (1535, Yes), the central authentication server may set the authenticity probability for the current verification request to a value that represents a slight penalty on the authenticity (1540). For example, the central authentication server may adjust a highest likelihood of authenticity by a slight penalty factor. For example, the central authentication server may divide the highest likelihood of authenticity by the number of consecutive unconfirmed verification requests, including the current verification request, plus one. In other words, on the first unconfirmed verification request, the system may divide the highest likelihood of authenticity by 1+1 (i.e., the current verification request plus one) to calculate the probability. The next time, the highest likelihood of authenticity may be divided by 2+1, *etc.* Thus, the system decrements the authenticity probability in such a way that it causes a sharp drop upon the first unconfirmed verification and gradually levels off to a smaller decrementation after many unconfirmed verifications. The central authentication server may also indicate that the verification request is unconfirmed (1545). The central authentication server may then store the data for the verification request, e.g., the velocity, the authenticity probability, *etc.,* and return the authenticity probability and any other relevant data or messages (1560). Process 1500 is then complete for this verification request.

If the security ratio threshold is not met (1535, No), the central authentication server may determine that the request is successful and set the authenticity probability to a value representing a highest likelihood that the product is authentic (1550). For example, in some implementations, the central authentication server may set the authentication to 1.00 where 1.00 represents the highest likelihood. The central authentication server may then store the data for the verification request, e.g., the velocity, the authenticity probability, *etc.,* and return the authenticity probability and any other relevant data or messages (1560). Process 1500 is then complete for this verification request.

In some cases, a product's owner may not have registered as the object origin pattern verification owner and may have carried the host product outside its secure velocity limits. As a result, the product owner then might not be able to escape a series of unconfirmed requests and the resultant penalization of his or her product's authenticity probability. To address this scenario, the central authentication server may provide for a request for verification ownership, where a user may submit a request to the central authentication server to become the verification owner of said object origin pattern. If the original owner allows for such requests to be submitted during the product's lifespan, the central authentication server will then receive the request and wait for several more verification requests to accumulate. Assuming no other more preferable time-location requests occur within that series of requests (which would void the ownership request), the central authentication server may add the requestor's identification as the verification owner for that object origin pattern, providing the product owner with all the privileges accompanying that designation.

According to some implementations, a method of authenticating a collection of items includes receiving identifiers for the items to be included in the collection from a requesting entity and determining whether the requesting entity is authorized to include the items in the collection. When the requesting entity is authorized, the method may include generating a collection identifier for the collection, generating a serial number component of an origin pattern, the serial number component being based on a hash of a private identifier for the requesting entity and the collection identifier, generating a fingerprint component of the origin pattern by manipulating a computer-generated graphic using the hash, storing the hash, the collection identifier, and the serial number component in a data store, and providing the origin pattern to the requesting entity, the requesting entity affixing the origin pattern to packaging for the items.

In some implementations, the collection identifier is a concatenation of the received identifiers for the items to be included in the collection. In some implementations, the method may include determining an aggregate type based on whether the items in the collection are owned by a single entity, whether the objects in the collection are instances of a same design, and whether an item is another collection, wherein determining whether the requesting entity is authorized includes determining whether a prior owner of one of the items prohibited inclusion of the one item in a collection having the determined aggregate type. In some implementations, for each item to be included the method may include determining whether the item is associated with another collection and, when the item is associated with another collection, determining that the requesting entity is not authorized to include the item in the collection. In some implementations, the method may include determining whether the item is associated with another collection and determining that the requesting entity is not authorized to include the item in the collection when the item is associated with another collection.

In some implementations, for each item to be included, the method may include determining whether the item is marked as authentic and determining that the requesting entity is not authorized to include the item in the collection when the item is not marked as authentic. In addition, in some implementations determining whether the item is authentic includes accessing a verification history for the item using the identifier. In some implementations, each item to be included in the collection has an associated origin pattern and the method further includes, for each item to be included: making a verification request using the associated origin pattern, receiving a response to the verification request, and determining that the requesting entity is not authorized to include the item in the collection when the response indicates failure to authenticate the item. In some implementations, the method further includes receiving a verification request from an inspector, the verification request including a serial number component obtained from the packaging, verifying that the serial number component obtained from the packaging exists in the data store, determining whether the collection is broken, and providing an indication that the verification request failed when the collection is broken. In some such implementations, determining that the collection is broken may include determining that verification requests for items in the collection represent diverging locations.

In some implementations, the method also includes receiving a verification request from an inspector, the verification request including a serial number component obtained from the packaging, verifying that the serial number component obtained from the packaging exists in the data store, determining whether steps in a transaction history are valid, and providing an indication that the verification request failed when the steps in the transaction history are not valid. In some such implementations, the method may further comprise storing the fingerprint component generated for the origin pattern in the data store and, when the steps in the transaction history are valid, the method can further include verifying that a fingerprint component obtained from the packaging matches the fingerprint component stored in the data store and providing an indication that the verification request failed when the fingerprint component does not match.

In one aspect a system comprises at least one processor and memory storing instructions that, when executed by the at least one processor, cause the system to perform operations. The operations may include receiving an identifier for a requestor of a digital identity origin pattern and at least one aggregate identifier that identifies an aggregate that includes at least one item, verifying that the aggregate is valid, generating a digital identity identifier by appending the at least one aggregate identifier with a pattern token, and generating a serial number component of the digital identity origin pattern. The serial number component can be based on a hash of a private identifier for an owner of the aggregate and the digital identity identifier. The operations may also include generating a fingerprint component of the digital identity origin pattern by manipulating a computer-generated graphics object using the hash, storing the hash, the digital identity identifier, and the serial number component in a data store, and providing the digital identity origin pattern to the requestor via a computer display. In some implementations, the requestor verifies ownership of the at least one item by the owner of the aggregate using the digital identity origin pattern.

In some implementations, verifying that the aggregate is valid may include determining that aggregate identifier exists in the data store and determining that the aggregate has not been flagged as fraudulent. In some implementations, verifying that the aggregate is valid may include determining an owner identifier for the aggregate from the data store and determining that the owner identifier matches a received owner identifier. In some implementations, verifying ownership using the digital identity origin pattern may include receiving a verification request, verifying that the requestor initiated the verification request, and verifying that the verification request occurs within a window defined using the pattern token, wherein the verification request fails to verify ownership if the requestor did not initiate the verification request or the verification request occurs outside the window. In some implementations, the digital identity origin pattern is based on a plurality of aggregate identifiers and the digital identity identifier is a concatenation of the aggregate identifiers and the pattern token.

In one aspect, a method of authenticating a seller who provides a digital identity origin pattern includes generating a first digital identity origin pattern that includes: a serial number component and a fingerprint component, each component being based on a hash of a unique identifier for the digital identity origin pattern that includes a pattern token, providing the first digital identity origin pattern for display, receiving a verification request that includes a second digital identity origin pattern and a verification requestor identifier, determining whether the verification requestor identifier matches a requestor identifier associated with the first digital identity origin pattern, determining whether a fingerprint component of the first digital identity origin pattern matches a fingerprint component of the second digital identity origin pattern, determining whether the verification request falls within a verification window that is based on the pattern token, and providing an indication of a successful authentication when the verification requestor identifier matches, the fingerprint component matches, and the verification request falls within the verification window. In some implementations, the unique identifier for the digital identity origin pattern is a concatenation of an aggregate identifier and the pattern token. In some implementations, the serial number component is based on a hash of a private identifier of an owner of the first digital identity origin pattern, the unique identifier for the first digital identity origin pattern, and a public identifier for the owner of the first digital identity origin pattern.

In one aspect, a method of authenticating an object includes generating a serial number component of an origin pattern and generating a surface-texture component of the origin pattern. The serial number component includes a public owner identifier and a product identifier sequence that is based on a hash of a private identifier for an owner and a private identifier for the object. The surface-texture component is a based on manipulation of computer graphics objects using the hash of the private identifier for the manufacturer and the private identifier for the object. The method also includes storing the hash and the serial number component in a data store and providing the origin pattern to a manufacturer, the manufacturer affixing the origin pattern to the object.

In addition, the method may also include receiving a verification request, the verification request including a serial number component, determining whether the serial number from the verification request exists in the data store, and providing an indication that the verification request failed when the scanned serial number does not exist in the data store. In addition or alternatively, the method may include receiving a verification request, the verification request including a serial number component obtained from a test object and a time-location stamp, determining that the serial number from the test object exists in the data store, receiving an image of a surface-texture component on the test object, and generating a challenge surface-texture component based on information in the data store stored with the serial number from the test object. In such implementations, the method may also include determining that the surface-texture component from the test object matches the challenge surface-texture component, determining whether the time-location stamp is outside constraints set by the manufacturer, and providing an indication that the verification request failed when the time-location stamp is outside the constraints.

In addition or alternatively, the method may include receiving a verification request from a requestor, the verification request including a serial number component obtained from a test object and a time-location stamp, verifying that the serial number component from the test object exists in the data store and that a surface-texture component on the test object matches a challenge surface-texture component generated based on information in the data store stored with the serial number from the test object, assigning an authenticity probability to the verification request based on the time-location stamp; and returning the authenticity probability for the test object to the requestor. In additional or alternatively, the method may include receiving a verification request from a requestor, the verification request including a serial number component obtained from a test object and a time-location stamp, verifying whether the serial number component obtained from the test object exists in the data store and whether a surface-texture component on the test object matches a challenge surface-texture component generated based on information in the data store stored with the serial number obtained from the test object, and providing a reward to the requestor of the verification request.

In addition or alternatively, the serial number component can include a chain of ownership identifier and the product identifier sequence is based on a hash of the private identifier for the owner, the private identifier for the object, and the chain of ownership identifier. In some implementations, the method may also include receiving a verification request from a requestor, the verification request including a serial number component obtained from a test object and a time-location stamp, verifying that the serial number component obtained from the test object exists in the data store and that a fingerprint component on the test object matches a challenge fingerprint component retrieved from the data store stored with the serial number obtained from the test object; using the chain of ownership identifier to determine whether a valid chain of ownership for the test object exists, and providing an indication that the verification request failed when a valid chain of ownership does not exist. In some implementations, the method may also include receiving a verification request from a requestor, the verification request including a serial number component obtained from a test object and a time-location stamp, verifying that the serial number component obtained from the test object exists in the data store and that a fingerprint component on the test object matches a challenge fingerprint component generated based on information in the data store stored with the scanned serial number, using the chain of ownership identifier to determine whether a valid chain of ownership for the test object exists, and providing an indication that the verification request failed when a valid chain of ownership does not exist.

In addition or alternatively, the method may include receiving a verification owner identifier for the origin pattern, storing the verification owner identifier with the hash and the serial number component in the data store, receiving a verification request from a requestor, the verification request including a serial number component obtained from an origin pattern on a test object and a requestor identifier, verifying that the serial number component obtained from the origin pattern on the test object exists in the data store and that a surface-texture component of the origin pattern on the object matches a challenge surface-texture component generated based on information in the data store stored with the serial number obtained from the test object, determining that the requestor identifier matches the verification owner identifier, and providing an indication that the verification request succeeded responsive to determining that the requestor identifier matches.

In another aspect a system includes at least one processor and memory storing instructions that, when executed by the at least one processor, cause the system to perform operations. The operations include generating a first hash of a private owner identifier, a product identifier, and a chain of ownership identifier, generating a three-dimensional surface using a first portion of the first hash, generating a texture pattern using a last portion of the first hash, and generating a surface-texture component of an origin pattern by mapping the texture pattern onto the three-dimensional surface. The operations also include generating a serial number component of the origin pattern, the serial number component including a public owner identifier and a product identifier sequence that is based on the first hash and the public owner identifier and providing the origin pattern for imprinting on the product.

In some implementations, the origin pattern may be provided as a computer-aided design image. In some implementations, the chain of ownership identifier may be either null or a valid public owner identifier for a second owner.

In addition or alternatively, the system may include a data store that stores information for the origin pattern, the information including the first hash, the public owner identifier, the product identifier sequence, a three-dimensional set of random numbers, and a two-dimensional set of random numbers. The three-dimensional set of random numbers may be used to transform control vertices of the three-dimensional surface as part of generating the three-dimensional surface, and the two-dimensional set of random numbers may be used to transform control vertices of the texture pattern as part of generating the texture pattern.

In another aspect, a method of authenticating a product with an origin pattern includes receiving an authentication request from a requestor, the authentication request including a serial number component from the origin pattern and a time-location stamp, and determining that the serial number component exists in a data store, the data store including a hash of a private owner identifier and a private object identifier for the serial number. The method also includes receiving an image of a fingerprint component of the origin pattern, determining that the fingerprint component in the image matches a challenge fingerprint component generated based on the hash, and determining an authenticity probability based on the time-location stamp. The method may also include storing the authenticity probability and the time-location stamp in the data store; and providing an indication of authenticity based on the authenticity probability.

In some implementations, determining the authenticity probability includes determining a distance for the product based on a location of the time-location stamp and a location of a previous verification request, determining a time between the time of the time-location stamp and a time of the previous verification request, determining a velocity based on the distance and the time; and calculating the authenticity probability by applying a severe penalty factor to an authenticity probability of the previous verification request when the velocity meets a velocity threshold. In addition, determining the authenticity probability may include determining that the velocity fails to meet the velocity threshold and calculating the authenticity probability by applying a slight penalty factor to the authenticity probability of the previous verification request when a ratio of the velocity to the velocity threshold meets a security ratio threshold. In addition or alternatively, determining the authenticity probability may include determining that the velocity fails to meet the velocity threshold and setting the authenticity probability to a value representing a highest likelihood of authenticity when a ratio of the velocity to the velocity threshold fails to meet a security ratio threshold. In addition or alternatively, determining the authenticity probability may include determining that the velocity fails to meet the velocity threshold and storing an indication, with the time-location stamp and the authenticity probability, that the authentication request is unconfirmed when the velocity meets the velocity threshold. In addition or alternatively, determining the authenticity probability may include determining that the velocity fails to meet the velocity threshold, calculating an average velocity over each previous consecutive unconfirmed verification requests, and calculating the authenticity probability by applying a slight penalty factor to a highest likelihood of authenticity when a ratio of the average velocity to the velocity threshold meets a security ratio threshold.

In some implementations, determining the authenticity probability may include determining whether a requestor identifier matches a verification owner for the origin pattern and setting the authenticity probability to a value representing a highest likelihood of authenticity when the requester identifier matches the verification owner. In addition or alternatively, the authenticity probability is a first authenticity probability and the method also includes receiving a request for verification ownership associated with a requestor identifier, receiving a series of authentication requests subsequent to receiving the request for verification ownership, determining that the series of authentication requests do not include a more preferable authenticity probability than the first authenticity probability, and setting a verification owner for the origin pattern to the requestor identifier.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. In addition, while a number of variations of the invention have been shown and described in detail, other modifications, which are within the scope of this invention, will be readily apparent to those of skill in the art based upon this disclosure. It is also contemplated that various combinations or subcombinations of the specific features and aspects of the embodiments may be made and still fall within the scope of the invention. Accordingly, it should be understood that various features and aspects of the disclosed embodiments can be combined with or substituted for one another in order to form varying modes of the disclosed invention. Thus, it is intended that the scope of the present invention herein disclosed should not be limited by the particular disclosed embodiments described above, but should be determined only by a fair reading of the disclosure.

## Claims

1. A method of authenticating a collection of items, the method comprising:
receiving identifiers for the items to be included in the collection from a
requesting entity;
determining whether the requesting entity is authorized to include the items in the
collection; and
when the requesting entity is authorized:
generating a collection identifier for the collection,
generating a serial number component of an origin pattern, the serial
number component being based on a hash of a private identifier for the requesting entity and the collection identifier,
generating a fingerprint component of the origin pattern by manipulating a
computer-generated graphic using the hash,
storing the hash, the collection identifier, and the serial number component
in a data store, and
providing the origin pattern to the requesting entity, the requesting entity
affixing the origin pattern to packaging for the items.

2. The method of claim 1, further comprising:
determining an aggregate type based on whether the items in the collection are
owned by a single entity, whether the items in the collection are instances of a same design, and whether an item is another collection,
wherein determining whether the requesting entity is authorized includes:
determining whether a prior owner of one of the items prohibited inclusion
of the one item in a collection having the determined aggregate type.

3. The method of claim 1, further comprising, for each item to be included:
determining whether the item is associated with another collection; and
when the item is associated with another collection, determining that the
requesting entity is not authorized to include the item in the collection.

4. The method of claim 1, further comprising, for each item to be included:
determining whether the item is marked as authentic; and
determining that the requesting entity is not authorized to include the item in the
collection when the item is not marked as authentic.

5. The method of claim 4, wherein determining whether the item is authentic includes:
accessing a verification history for the item using the identifier.

6. The method of claim 1, wherein each item to be included in the collection has an associated origin pattern and the method further comprises, for each item to be included:
making a verification request using the associated origin pattern;
receiving a response to the verification request; and
determining that the requesting entity is not authorized to include the item in the
collection when the response indicates failure to authenticate the item.

7. The method of claim 1, further comprising:
receiving a verification request from an inspector, the verification request
including a serial number component obtained from the packaging;
verifying that the serial number component obtained from the packaging exists in
the data store;
determining whether the collection is broken; and
providing an indication that the verification request failed when the collection is
broken.

8. The method of claim 7, wherein determining that the collection is broken includes:
determining that verification requests for items in the collection represent
diverging locations.

9. The method of claim 1, further comprising:
receiving a verification request from an inspector, the verification request
including a serial number component obtained from the packaging;
verifying that the serial number component obtained from the packaging exists in
the data store;
determining whether steps in a transaction history are valid; and
providing an indication that the verification request failed when the steps in the
transaction history are not valid.

10. The method of claim 9, the method further comprising storing the fingerprint component generated for the origin pattern in the data store and wherein when the steps in the transaction history are valid, the method further comprises:
verifying that a fingerprint component obtained from the packaging matches the
fingerprint component stored in the data store; and
providing an indication that the verification request failed when the fingerprint
component does not match.

11. A system comprising:
at least one processor; and
memory storing instructions that, when executed by the at least one processor,
cause the system to:
receive an identifier for a requestor of a digital identity origin pattern and
at least one aggregate identifier that identifies an aggregate that includes at least one item,
verify that the aggregate is valid,
generate a digital identity identifier by appending the at least one
aggregate identifier with a pattern token,
generate a serial number component of the digital identity origin pattern,
the serial number component being based on a hash of a private identifier for an owner of the aggregate and the digital identity identifier,
generate a fingerprint component of the digital identity origin pattern by
manipulating a computer-generated graphics object using the hash, store the hash, the digital identity identifier, and the serial number
component in a data store, and
provide the digital identity origin pattern to the requestor via a computer
display,
wherein the requestor verifies ownership of the at least one item by the
owner of the aggregate using the digital identity origin pattern.

12. The system of claim 11, wherein verifying ownership using the digital identity origin pattern includes:
receiving a verification request;
verifying that the requestor initiated the verification request; and
verifying that the verification request occurs within a window defined
using the pattern token,
wherein the verification request fails to verify ownership if the requestor
did not initiate the verification request or the verification request occurs outside the window.

13. The system of claim 11, wherein the digital identity origin pattern is based on a plurality of aggregate identifiers and the digital identity identifier is a concatenation of the aggregate identifiers and the pattern token.

14. The system of claim 11, wherein the digital identity origin pattern is a first digital identity origin pattern and verifying ownership using the digital identity origin pattern includes:
receive a verification request that includes a second digital identity origin pattern
and a verification requestor identifier;
determine whether the verification requestor identifier matches the requestor
identifier of the first digital identity origin pattern;
determine whether a fingerprint component of the first digital identity origin
pattern matches a fingerprint component of the second digital identity origin pattern;
determine whether the verification request falls within a verification window that
is based on the pattern token; and
provide an indication of a successful authentication when the verification
requestor identifier matches, the fingerprint component matches, and the verification request falls within the verification window.

15. The system of claim 14, wherein the serial number component is based on a hash of a private identifier of an owner of the first digital identity origin pattern, the unique identifier for the first digital identity origin pattern, and a public identifier for the owner of the first digital identity origin pattern.
